(19) **Europäisches Patentamt / European Patent Office / Office européen des brevets**

(11) **EP 2 711 747 A1**

(12) # EUROPEAN PATENT APPLICATION
published in accordance with Art. 153(4) EPC

(43) Date of publication:
26.03.2014 Bulletin 2014/13

(51) Int Cl.:
*G02B 5/26* (2006.01)   *G02B 5/28* (2006.01)

(21) Application number: 12786613.5

(22) Date of filing: 17.05.2012

(86) International application number:
PCT/JP2012/062588

(87) International publication number:
WO 2012/157692 (22.11.2012 Gazette 2012/47)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 17.05.2011   JP 2011110592
19.08.2011   JP 2011179437

(71) Applicant: Konica Minolta, Inc.
Tokyo 100-7015 (JP)

(72) Inventor: TAKAMUKI, Yasuhiko
Chiyoda-ku, Tokyo 100-7015 (JP)

(74) Representative: Gille Hrabal
Brucknerstrasse 20
40593 Düsseldorf (DE)

(54) **INFRARED SHIELDING FILM, METHOD FOR PRODUCING INFRARED SHIELDING FILM, AND INFRARED SHIELD**

(57) The objects of the present invention is to provide an infrared shielding film, a method for producing same, and an infrared shielding body provided with the infrared shielding film, whereby it is possible to maintain stable infrared shielding property, visible light transmittance, flexibility, and transparency over time. This infrared shielding film having at least one unit consisting of a high refractive index layer having metal oxide particles and a low refractive index layer on a substrate is achieved when (i) at least one layer of the high refractive index layer and the low refractive index layer contains a temperature responsive polymer as a binder component or (ii) the high refractive index layer has any one of a cellulose compound or polyvinyl acetal resin as a binder component, and the low refractive index layer contains a binder component different from that of the high refractive index layer.

## Description

### TECHNICAL FIELD

The present invention relates to an infrared shielding film, a method for producing an infrared shielding film, and an infrared shielding body.

### BACKGROUND ART

In recent years, due to the growing interest in energy saving, there is a high demand for an infrared shielding film which shields transmission of heat ray from sunlight, by installing it in the windowpane of buildings or vehicles, from a viewpoint of reducing a load applied to air conditioning facilities.

Conventionally, a dry film forming method such as a vapor deposition method or a sputtering method has been proposed as a method of producing an infrared shielding film to form laminated films by laminating a high refractive index layer and a low refractive index layer by turns. However, since the dry film forming methods need a large sized vacuum equipment used for the forming, there are problems that it requires high manufacture cost, and it is difficult to form a film with a large area, and a substrate is limited to a heat resistant material.

Patent Literature 1 discloses a laminated film produced by laminating two or more types of polymer layers having different glass transition temperatures and refractive indexes. In Patent literature 1, a heat ray reflecting film is disclosed, and in the film, the (refractive indexes of the polymers vary by temperature so that the difference in refractive indexes also varies among the polymers and the infrared reflectance varies by temperature. Accordingtothe technique, however, since the difference in refractive index is small among the polymers, lamination of 20 to 40 layers is required then, it is disadvantages in terms of cost and it is difficult to produce the film in large size because of the large number of layers. In addition, as polymers with different glass transition temperatures are laminated, deformation of an internal structure may be caused by repeated a cold temperature and a hot temperature during the use for a long period of time, and therefore there is a problem that the infrared shielding property or visible light transmission may be easily lowered.

Instead of the dry film forming method having the problems disclosed above, a wet coating method (a wet film forming method) by which an infrared shielding film is formed by coating a solution is advantageous in that the production cost is low and it is relatively easy to achieve a large size.

For example, in Patent Literatures 2 and 3, a method of forming a transparent laminate is disclosed, and the method includes coating a composition for forming a coating film comprising titan oxide, a ultraviolet curing binder or a heat curing binder, and an organic solvent by the wet coating method using a spin coater (bar coater) or the like on a substrate.

Prior Art Document

Patent Literatures

Patent Literature 1: JP 6-11608 A
Patent Literature 2: JP 2004-123766 A
Patent Literature 3: JP 2009-86659 A

### SUMMARY OF INVENTION

Technical Problem

According to the technique disclosed in Patent Literatures 2 and 3, however, a ultraviolet curing binder or a heat curing binder is used, an unreacted binder (monomer) is cured by ultraviolet rays or heat after film formation, and thus the flexibility tends to be insufficient over time. There is also a problem in that, as an unreacted binder (monomer) is decomposed over time, the coating film is discolored.

As described above, currently the stable film performance is yet to be obtained.

The present invention is devised in view of the problems described above, and an object of the invention is to provide an infrared shielding film capable of maintaining stable infrared shielding property, visible light transmittance, flexibility, and transparency over time, a method for producing the infrared shielding film, and an infrared shielding body provided with the infrared shielding film.

Solution to Problem

The inventors of the present invention conducted intensive studies in view of the problems described above. As a result, it was surprisingly found that the problem can be solved by an infrared shielding film in which a high refractive index layer or a low refractive index layer includes a particular resin as a binder component, and then, the invention was completed accordingly.

Specifically, the aforementioned object of the invention is achieved by the constitutions to be described below.

1. An infrared shielding film comprising at least one unit consisting of a high refractive index layer including metal oxide particles and a low refractive index layer on a substrate, wherein (i) at least one layer of the high refractive index layer and the low refractive index layer includes a temperature responsive polymer as a binder component; or (ii) the high refractive index layer includes any one of a cellulose compound and Polyvinyl acetal resin as a binder component, and the low refractive index layer includes a binder component different from the binder component of the high refractive index layer.

2. The infrared shielding film according to 1 described above, wherein the metal oxide particles include titanium oxide particles.

3. The infrared shielding film according to 1 or 2 described above, wherein at least one layer of the high refractive index layer and the low refractive index layer includes the temperature responsive polymer.

4. The infrared shielding film according to any one of 1 to 3 described above, wherein the temperature responsive polymer includes poly-N-isopropyl acrylamide.

5. The infrared shielding film according to 1 or 2 described above, wherein the high refractive index layer includes any one of a cellulose compound and a polyvinyl acetal resin as a main component of the binder component, and the low refractive index layer includes the other of a cellulose compound and a polyvinyl acetal resin as a main component of the binder component.

6. The infrared shielding film according to 5 described above, wherein the cellulose compound is acetyl C3-6 acyl cellulose.

7. The infrared shielding film according to 5 or 6 described above, wherein surface of the titanium oxide particles is coated with oil.

8. The infrared shielding film according to any one of 1 to 7 described above, wherein a difference in refractive indexes between the high refractive index layer and the low refractive index layer is 0.1 or higher.

9. Method for producing an infrared shielding film including at least one unit consisting of a high refractive index layer including metal oxide particles and a low refractive index layer on a substrate, wherein (i) at least one layer of the high refractive index layer and the low refractive index layer is formed by using a coating liquid including a temperature responsive polymer; or (ii) the high refractive index layer is formed by using a coating liquid including any one of a cellulose compound and a polyvinyl acetal resin, and the low refractive index layer is formed by using a coating liquid including the other of the cellulose compound and the Polyvinyl acetal resin.

10. The method according to 9 described above, wherein any one coating liquid of the coating liquid for forming the high refractive index layer and the coating liquid for forming the low refractive index layer includes a temperature responsive polymer, simultaneous multilayer coating is performed while a temperature of any one of the coating liquid for forming the high refractive index layer and the coating liquid for forming the low refractive index layer is set to be lower than a critical solution temperature of the temperature responsive polymer and a temperature that the other is set to be equal to or higher than the critical solution temperature of the temperature responsive polymer, and the layers are dried to form the high refractive index layer and the low refractive index layer.

11. The method according to 9 described above, wherein the method includes: coating, on a substrate, the coating liquid for forming the high refractive index layer including any one of the cellulose compound and the polyvinyl acetal resin as a main component of a binder component, the metal oxide particles and a solvent, and the coating liquid for forming the low refractive index layer including the other of the cellulose compound and the polyvinyl acetal resin as a main component of a binder component and a solvent,; and drying the substrate coated with the coating liquid.

12. An infrared shielding body comprising the infrared shielding film according to any one of 1 to 8 described above or the infrared shielding film obtained by the method according to any one of 9 to 11 described above on at least one surface of a substrate.

Effect of the Invention

According to the invention, an infrared shielding film maintaining stable infrared shielding property, visible lighttransmittance, flexibility, and transparency over time, a method for producing the infrared shielding film, and an infrared shielding body comprising the infrared shielding film can be provided.

**DESCRIPTION OF EMBODIMENTS**

Hereinafter, embodiments for carrying out the invention will be described in more detail.

The invention relates to an infrared shielding film having at least one unit consisting of a high refractive index layer including metal oxide particles and a low refractive index layer on a substrate, in which (i) at least one layer of the high refractive index layer and the low refractive index layer includes a temperature responsive polymer as a binder component or (ii) the high refractive index layer includes any one of a cellulose compound and a polyvinyl acetal resin as a binder component, and the low refractive index layer includes a binder component different from that of the high refractive index layer. With the constitution of (i) or (ii), it was found that an infrared shielding film having an excellent infrared shielding property, visible light transmittance, flexibility, and transparency even for the use for a long period of time can be achieved by the invention

According to production of an infrared shielding film in the prior art, polymers of different glass transition temperatures are laminated, for example. Since the difference in refractive indexes is small among the polymers, not only the number of the layer needs to be increased but also an internal deformation is easily caused due to a difference in expansion and shrinking ratio according to temperature change among the polymers, and thus the film has a problem in terms of durability.

According to another method in the prior art, for example, for producing a near infrared shielding film by a wet coating method, the infrared shielding film is formed by using a coating liquid including an organic solvent and a conventional binder such as a ultraviolet curing binder (monomer) and a heat curing binder (monomer). However, because an unreacted binder (monomer) is cured by ultraviolet ray or heat, the film has a problem that flexibility is insufficient over time, and as the unreacted binder (monomer) decomposes overtime, the coating film is discolored. In other words, the methods in the prior art have a problem in terms of environmental adaptation and stability over time after forming a film.

As a result of conducting intensive studies, the inventors of the present invention has achieved, by using a specific resin as a binder component, an infrared shielding film in which an internal deformation over time is suppressed, flexibility is maintained at the same time, and further transparency over time is maintained (that is, not colored over time) because reactive substances are not in the film.

That is, as a result of the intensive studies, the inventors found that, by using (i) a coating liquid in which at least one layer of the high refractive index layer and the low refractive index layer includes a temperature responsive polymer or (ii) a coating liquid in which the high refractive index layer includes any one of a cellulose compound and a polyvinyl acetal resin, and also by using a coating liquid in which the low refractive index layer includes a binder component different from that of the high refractive index layer, concerns over polymerization or decomposition after film formation is solved then stability over time can be ensured. Further, although it remains unclear, it is understood to have the mechanism as follows.

With a common binder for a wet laminating coating, it is deduced that an existing layer surface swells in coating interface when a new coating liquid is coated on the layer of previously formed coating to cause mixing of the compounds in adjacent layers, and thus sufficient difference in refractive indexes cannot be generated. On the other hand, in the present invention, it is understood that the mixing at the interface is suppressed by a specific binder or a combination of specific binders. Specifically, it is understood that, when a coating liquid including a temperature responsive polymer is used, the temperature responsive polymer deposits in the coating-formed layer and fixes, and thus even after coating with a new coating liquid on the coating-formed layer, mixing of the compounds is suppressed in the coating interface (on existing layer surface) and an infrared shielding film having favorable infrared shielding ratio and visible light transmission can be obtained. Alternatively, when a coating liquid including any one of a cellulose compound and a polyvinyl acetal resin is used as a binder component for the high refractive index layer and a coating liquid including a binder component different from that of the high refractive index layer is used for the low refractive index layer, it is understood that, even when a new coating liquid is coated on the layer formed with the other coating liquid, mixing of the compounds is suppressed in the coating interface (on existing layer surface), and thus an infrared shielding film having favorable infrared shielding ratio and visible light transmission can be obtained.

As a result of intensive studies, the inventors also found that, when (i) an aqueous coating liquid including a temperature responsive polymer is used for at least one layer of the high refractive index layer and the low refractive index layer or (ii) for the higher refractive index layer, an aqueous coating liquid including any one of a cellulose compound or a polyvinyl acetal resin is used, and for low refractive index layer, an aqueous coating liquid including a binder component different from that of the high refractive index layer is used, the environmental adaptability is also excellent.

In the present specification, the expression "X to Y" indicates a range "equal to or higher than X but lower than or equal to Y" including X and Y. The terms "weight" and "mass", " % by weight" and "% by mass", and "parts by weight" and "parts by mass" as a unit for weight are all regarded as synonyms.

Hereinafter, constitutional elements of the infrared shielding film of the invention and embodiments for carrying out the invention will be described in detail.

**EP 2 711 747 A1**

[Infrared shielding film]

The infrared shielding film of the invention includes at least one unit consisting of a high refractive index layer which include metal oxide particles and a low refractive index layer on a substrate.

The infrared shielding film of the invention has at least one infrared shielding unit which is constituted by laminating, on a substrate, two or more refractive index layers each having the refractive index different from an adjacent layer. In other words, the infrared shielding film of the invention has at least one infrared shielding unit consisting of two or more layers having the refractive indexes different from each other on a substrate.

The expression a "refractive index layer having the refractive index different from that of an adjacent layer" means that the refractive index of the refractive index layer is different from the refractive index of a layer adjoining it (adjacent layer), and it is sufficient for the infrared shielding unit of the invention that the refractive index layers satisfying the relation are laminated by turns.

Among the two or more layers having the refractive indexes different from one another, the layer having relatively higher refractive index is referred to as a "high refractive index laser" while the layer having relatively lower (refractive index is referred to as a "low refractive index layer", hereinafter. In other words, the expressions "high refractive index layer" and "low refractive index layer" described in the present specification mean that, when two adjacent layers are compared to each other for refractive index, a refractive index layer having higher refractive index corresponds to a high refractive index layer, while a refractive index layer having lower refractive index corresponds to a low refractive index layer. Accordingly, expressions "high refractive index layer" and "low refractive index layer" include, when attention is paid to two adjacent refractive index layers in respective refractive index layers constituting an optical reflective film, all forms other than a form in which the respective refractive index layers have the same refractive index. It is preferable that, in the infrared shielding unit of the invention, a high refractive index layer and a low refractive index layer be laminated by turns.

According to the invention, the infrared shielding film includes at least one laminate (unit) consisting of two layers having different refractive index, that is, a high refractive index layer and a low refractive index layer, and the high refractive index layer and the low refractive index layer will be envisaged as follows.

For example, there can be a case in which a component constituting the high refractive index layer (hereinafter, a high refractive index layer component) and a component constituting the low refractive index layer (hereinafter, a low high refractive index layer component) are mixed at an interface of the two layers then a layer including the high refractive index layer component and also the low refractive index layer component (mixed layer) is formed. In such case, an integral of the portions in which the high refractive index layer component is 50% by mass or more corresponds to the high refractive index layer, while an integral of the portions in which the low refractive index layer component is 50% by mass or more corresponds to the low refractive index layer component in the mixed layer. Specifically, for a case in which the high refractive index layer includes first metal oxide particles as a high refractive index component, while the low refractive index layer includes second metal oxide particles as a low refractive index component, by measuring along with film thickness direction the metal oxide concentration profile in the laminated film, and depending on the composition, it is determined as either a high refractive index layer or a low refractive index layer. The metal oxide concentration profile in the laminated film may be observed by etching by using a sputtering method in depth direction from the surface, measuring the atomic composition ratio by using a XPS surface analyzer while sputtering with conditions that the outermost surface is 0 nm and the speed is 0.5 nm/min. For a laminate without metal oxide particles in the low refractive index component or the high refractive index component but consisted of an organic binder only, similarly it is also possible that presence of a mixed region is observed by measuring carbon concentration from the organic binder concentration profile in film thickness direction, for example, and the composition is measured by EDX so that each layer etched by sputtering may be regarded as either a high refractive index layer or a low refractive index layer.

With regard to an XPS surface analyzer, any type of the instrument can be used without particular limitation. However, ESCALAB-200R manufactured by VG Scientific Co., Ltd. was used. Mg is used for an X ray anode and the measurement is made at an output of 600 W (an acceleration voltage of 15 kV and an emission electric current of 40 mA).

It is sufficient for the infrared shielding film of the invention to have a constitution in which at least one unit consisting of a high refractive index layer and a low refractive index layer is laminated on a substrate. Upper limit of the total number of the high refractive index layer and the low refractive index layer is preferably 100 layers or less, that is, 50 units or less. Further, because the productivity is improved and reduction in transparency caused by scattering at lamination interface can be suppressed by lowering the layer number, it is more preferably 40 layers (20 units) or less, and still more preferably 20 layers (10 units) or less. It is sufficient for the infrared shielding film of the invention to have a constitution in which at least one unit is laminated, and for example, it may be a laminated film in which any one of the outermost layer and the innermost layer of the laminated film may be either a high refractive index layer or a low refractive index layer.

With regard to the infrared shielding film, designing to have a large difference in refractive indexes between the high refractive index layer and the low refractive index layer is generally preferred in terms of increasing infrared reflectance with low number of layers. In the present invention, however, for at least one unit consisting of the high refractive index layer and the low refractive index layer, the difference in refractive indexes between the adjacent high refractive index layer and the low refractive index layer is preferably 0.1 or higher. More preferably, it is 0.3 or higher, and still more preferably it is 0.4 or higher.

With regard to the infrared shielding film of the invention, the difference in refractive indexes between the adjacent high refractive index layer and the low refractive index layer is preferably 0.1 or higher. However, when each of the high refractive index layer and the low refractive index layer has plural layers as described above, it is preferable that all the refractive index layers satisfy the requirements defined in the invention, with the proviso that the outermost layer or innermost layer may have a constitution other than the requirements defined in the invention.

The reflectance in specific wavelength range is determined by the difference in refractive indexes between two adjacent layers (high refractive index layer and low refractive index layer) and their lamination number. As the difference in refractive index increases, smaller number of layers is needed to have the same reflectance. The difference in refractive indexes and required number of layers can be calculated by using a commercially available software for optical design. For examples, to obtain the infrared shielding rate of 90% or more, more than one hundred laminated layers are needed if the difference in refractive index is less than 0.1, which yields lower productivity and lower transparency due to increased scattering at lamination interfaces. From the viewpoint of improving the reflectance and reducing the number of layers, the difference in refractive indexes substantially has a limit of 1.40 or so, although there is no upper limit.

With regard to the infrared shielding film of the invention, the refractive index of the high refractive index layer is preferably 1.80 to 2.50, and more preferably 1.90 to 2.20. The refractive index of the low refractive index layer of the invention is preferably 1.10 to 1.60, more preferably 1.30 to 1.55, and still more preferably 1.30 to 1.50.

In the invention, the refractive index of the high refractive index layer and the low refractive index layer can be obtained according to the following method.

A sample having a refractive index layer coated as a single layer on a substrate to measure the refractive index is prepared. The sample is cut out to 10 cm x 10 cm, followed by determination of the refractive index according to the following method. The side opposite to the measurement side of each sample (back side) is subjected to a roughening treatment, followed by optical absorption processing with black spray to prevent the light reflection from the back side, and by using U-4000 type (manufactured by Hitachi, Ltd.) as a spectrophotometer, reflectance in visible light range (400 nm to 700 nm) is measured at 25 points under 5 degree mirror reflection condition, and an average is calculated to determine an average refractive index from the measurement results.

The total thickness of the infrared shielding film of the present invention is preferably 0.5 to 315 $\mu$m, more preferably 1 to 200 $\mu$m, and still more preferably 1.5 to 100 $\mu$m. The infrared shielding film of the invention has thinner film thickness as compared with the infrared shielding film in the prior art, and thus it is possible to obtain high infrared shielding ratio.

A thickness of the single layer of the high refractive index layer in the invention (a thickness after drying) is preferably 20 to 800 nm, and more preferably 50 to 350 nm. A thickness of the single layer of the low refractive index layer in the invention (a thickness after drying) is preferably 20 to 800 nm, and more preferably 50 to 350 nm.

Moreover, with regard to the optical characteristics of the infrared shielding film of the invention, it is preferable to have a transmittance of 50% or more in the visible light region measured based on JIS R3106-1998 and a reflectance of 50% or more in a wavelength region of 900 nm to 1,400 nm.

The infrared shielding film of the invention may have, under the substrate or on the outermost layer on the opposite side of the substrate, at least one functional layer such as a conductive layer, an anti-static layer, a gas barrier layer, an easy adhesion layer (adhesive layer), an anti-fouling layer, a disinfecting layer, a droplet flowing layer, a lubricating layer, a hard coat layer, an anti-wearing layer, an anti-reflection layer, an electromagnetic wave shield layer, a UV absorbing layer, an infrared absorbing layer, a printed layer, a fluorescence luminescent layer, a hologram layer, a release layer, a tacky layer, an adhesive layer, an infrared cut layer (for example, metal layer and a liquid crystal layer) other than the high refractive index layer and the low refractive index layer of the invention, a colored layer (layer for absorbing visible light), or an intermediate film layer used for laminated glass, for the purpose of having one or more additional functions.

[High refractive index layer and low refractive index layer]

Hereinafter, the high refractive index layer and the low refractive index layer constituting the infrared shielding film of the invention will be described.

The high refractive index layer of the invention includes, a temperature responsive polymer, a cellulose compound, or a polyvinyl acetal resin as a binder component, and includes metal oxide particles.

The low refractive index layer of the invention includes a binder component, and preferably includes metal oxide particles.

\<Binder component>

The high refractive index layer and the low refractive index layer of the invention include a binder component in the following embodiment.

According to the embodiment (i) of the infrared shielding film of the invention, a temperature responsive polymer is included as a binder component in at least one layer of the high refractive index layer and the low refractive index layer. According to the embodiment (ii) of the infrared shielding film of the invention, any one of a cellulose compound and a polyvinyl acetal resin is included as a binder component in the high refractive index layer and a binder component different from that of the high refractive index layer is included in the low refractive index layer.

The preferred embodiment (i) of the invention includes that a temperature responsive polymer is included as a main component of a binder component in at least one layer of the high refractive index layer and the low refractive index layer. More preferably, a temperature responsive polymer is included in the high refractive index layer and the low refractive index layer. Still more preferably, selection is made such that the critical solution temperature of the temperature responsive polymer included in the high refractive index layer is different from the critical solution temperature of the temperature responsive polymer contained in the low refractive index layer. By having such constitution, mixing of adjacent layers at an interface can be effectively suppressed.

According to the preferred embodiment (ii) of the invention, any one of a cellulose compound and a polyvinyl acetal resin is included as a main component of a binder component in the high refractive index layer and a binder component different from that of the high refractive index layer is included in the low refractive index layer. According to more preferred embodiment, any one of a cellulose compound and a polyvinyl acetal resin is included as a main component of a binder component in the high refractive index layer and the other of a cellulose compound and a polyvinyl acetal resin is included as a main component of a binder component in the low refractive index layer.

At that time, it is necessary that a different main component of a binder component is used for both of the high refractive index layer and the low refractive index layer. For example, when a cellulose compound is included in the high refractive index layer, a binder component other than the cellulose compound (for example, a polyvinylacetal resin) needs to be included in the low refractive index layer. In the embodiment (ii) of the invention, the inclusion of only the cellulose compound or only the polyvinyl acetal resin as a binder component in each layer is the most preferable constitution for preventing a reduction in the difference in refractive index which is caused by interface mixing during the production. However, in an extent that the effect of the invention is not impaired, the other may be partially mixed or other polymer compound may be mixed as a binder component. The mixing ratio is preferably 0.01 to 5% by mass, and more preferably 0.01 to 1% by mass of the total amount of the binder component. Specifically, for a case in which a cellulose compound and a polyvinyl acetal resin are used in combination in any layer (for example, the high refractive index layer), it is preferable to include any one of them (for example, the cellulose compound) at 99.09 to 95% by mass of the total amount of the cellulose compound and the polyvinyl acetal. For such case, it is preferable to include the other of them (for example, polyvinyl acetal resin) at 99. 09 to 95% by mass in the other layer (for example, the low refractive index layer). In the present invention, use of the polyvinyl acetal resin as a main component of a binder component in the high refractive index layer is preferable in that the transparency may be further enhanced.

As described above, according to the embodiment (ii) of the invention, the low refractive index layer preferably includes the other of the cellulose compound and the polyvinyl acetal resin (that is, the component which is different from the main component of a binder component in the high refractive index layer) as a main component of a binder component.

In other words, in the low refractive index layer of the invention, similar to the high refractive index layer, any one of the cellulose compound and the polyvinyl acetal resin may be used as a main component of the binder component. At that time, since different components are used as a main component of a binder component in the two layers, as a main component of the binder component in the low refractive index layer, a component different from the main component of the binder component in the high refractive index layer is used.

Also for the low refractive index layer, the constituting of only of a cellulose compound or a polyvinyl acetal resin as the binder component is the most preferable constitution for preventing a reduction in the difference in refractive index which is caused by interface mixing during the production. However, within the range in which the effect of the invention is not impaired, the other may be partially mixed or other polymer compound may be mixed. The mixing ratio is preferably 0.01 to 5% by mass, and more preferably 0.01 to 1% by mass of the total amount of the binder component.

As described herein, the "main component" means that it occupies a ratio of 50% by mass or more with respect to 100% by mass of the total amount of the constitutional materials for the binder component. The ratio of the main component (a temperature responsive polymer, a cellulose compound, or a polyvinyl acetal resin) in 100% by mass of the total amount of the constitutional materials for the binder component is preferably 95% by mass or more, more preferably 98% by mass or more, still more preferably 99% by mass or more, and most preferably 100% by mass.

In the specification, the binder component means a polymer compound which has a weight average molecular weight of 1,000 to 300,000. The molecular weight of the polymer compound is preferably 1, 000 to 200, 000, and more preferably 3,000 to 40,000. Meanwhile, in the specification, values measured by a gel permeation chromatography (GPC) are adopted as the weight average molecular weight.

Specifically, the weight average molecular weight is defined as the molecular weight in terms of polystyrene which is measured by a GPC analyzer using the columns of TSKgel GMHxL, TSKgel G4000HxL, or TSKgel G2000HxL (all manufactured by TOSOH CORPORATION), THF as a solvent, and detection by a scanning diffractometer.

In the high refractive index layer, the binder component is preferably 30 to 85% by mass, more preferably 35 to 80% by mass, and still more preferably 40 to 70% by mass of the total mass of the high refractive index layer (mass of the solid part).

In the low refractive index layer, the binder component is preferably 1 to 100% by mass, and more preferably 5 to 100% by mass of the total mass of the low refractive index layer (mass of the solid part). When the low refractive index layer includes the metal oxide particles, the binder component is preferably 10 to 85% by mass, and more preferably 20 to 60% by mass of the total mass of the low refractive index layer (mass of the solid part).

Hereinafter, the temperature responsive polymer, cellulose compound and polyvinyl acetal compound that are used in the high refractive index layer and the low refractive index layer of the invention will be described.

(a) Temperature responsive polymer

According to the embodiment (i) of the invention, a temperature responsive polymer is included as a binder component in at least one layer of the high refractive index layer and the low refractive index layer.

Hereinafter, the temperature responsive polymer will be described.

The temperature responsive polymer used in the invention indicates a polymer which exhibits a change of water solubility with the critical solution temperature as a boundary in the range of 0 to 60°C. The temperature responsive polymer is categorized into a polymer having the lower limit critical solution temperature and a polymer having the upper limit critical solution temperature. The polymer having the lower limit critical solution temperature indicates a polymer that dissolves in a solvent at a temperature lower than the critical solution temperature but, when the temperature increases to the critical solution temperature (that is, at a temperature equal to or higher than the critical solution temperature), the polymer separates from the solvent. On the other hand, the polymer having the upper limit critical solution temperature indicates a polymer that dissolves in a solvent at a temperature equal to or higher than the critical solution temperature but, when the temperature decreases to the critical solution temperature (that is, at a temperature lower than the critical solution temperature), the polymer separates from the solvent.

The critical solution temperature indicates a temperature obtained by adding a polymer to water at a ratio of 1% by mass, heating to a fine state, and changing the temperature of the water including in the polymer at ratio of 1°C per minute, and measuring the temperature at which the visible light transmittance is 1/2 of the value in the fine state. There is also a case in which the visible light transmittance of the polymer exhibits 1/2 of the value in the fine state and the 1/2 value is maintained in a certain temperature range even if the temperature is increased or decreased. The upper limit of such temperature range is defined as the upper limit temperature of the critical solution when the temperature increases, and the lower limit of the same is defined as the lower limit critical solution temperature when the temperature decreases.

As for the polymer having the lower limit critical solution temperature of the invention, examples of the polymer moiety (copolymerization component) exhibiting temperature responsiveness include a polymer consisting of N substituted (meth) acrylamide derivatives such as N-n-propyl acrylamide, N-isopropyl acrylamide, N-ethyl acrylamide, N,N-dimethyl acrylamide, N,N-diethyl acrylamide, N-acryloyl pyrrolidine, N-acryloyl piperidine, N-acryloyl morpholine, N-n-propyl methacrylamide, N-isopropyl methacrylamide, N-methyl methacrylamide, N,N-dimethyl methacrylamide, N-methacryloyl pyrrolidine, N-methacryloyl piperidine, or N-methacryloyl morpholine; polyoxyethylenealkylamine derivatives such as partial acetification product of polyvinyl alcohol, polyvinylmethyl ether, (polyoxyethylene-polyoxypropylene) block copolymer, or polyoxyethylenelaurylamine; polyoxyethylene sorbitan ester derivatives such as polyoxyethylene sorbitan laurate; (polyoxyethylenealkylphenyl ether)(meth)acrylates such as (polyoxyethylenenonylphenyl ether)acrylate or (polyoxyethyleneoctylphenyl ether)methacrylate; and polyoxyethylene (meth)acrylic acid ester derivatives such as (polyoxyethylene alkyl ether)(meth)acrylates like (polyoxyethylenelauryl ether)acrylate and (polyoxyethyleneoleyl ether)methacrylate. Those polymer moieties having the lower limit critical solution temperature may be any one of a homopolymer consisting of the monomer described above or a copolymer consisting of at least two monomers described above. Among them, as the polymer moieties having the lower limit critical solution temperature, a homopolymer or a copolymer including at least one monomer selected from the group consisting of N-n-propyl acrylamide, N-isopropyl acrylamide, N-ethyl acrylamide, N,N-dimethyl acrylamide, N,N-diethyl acrylamide, N-acryloylpyrrolidine, N-acryloyl piperidine, N-acryloyl morpholine, N-n-propyl methacrylamide, N-isopropyl methacrylamide, N-ethyl methacrylamide, N,N-dimethyl methacrylamide, N-methacryloyl pyrrolidine, N-methacryloyl piperidine, and N-methacryloyl morpholine may be preferably used. However, the homopolymer of N-isopropyl acrylamide is more preferable as it can further enhance the flexibility.

Specifically, N-n-propyl acrylamide having the lower limit critical solution temperature of 21°C, N-isopropyl acrylamide having the lower limit critical-solution temperature of 32°C, and N,N-diethyl acrylamide having the lower limit critical solution temperature of 32°C are preferable.

As for the polymer having the upper limit critical solution temperature of the invention, examples of the polymer moiety (copolymerization component) exhibiting temperature responsiveness include a polymer including at least one monomer selected from the group consisting of acrylamide, methacrylamide, N-acetyl acrylamide, biotinol acrylate, N-biotinyl-N'-methacroyltrimethylene amide, acryloylglycine amide, acryloylasparagine amide, acryloylsarcosine amide, methacrylsarcosine amide, acroylnipecotamide, and acroylmethyl uracil. The polymer part having the upper limit critical solution temperature may be any one of a homopolymer consisting of the monomer described above or a copolymer consisting of at least two monomers described above. Among them, as the polymer moiety having the upper limit critical solution temperature, a polymer or a copolymer including at least one monomer selected from the group consisting of acrylamide, methacrylamide, N-acetyl acrylamide, biotinol acrylate, N-biotinyl-N'-methacroyltrimethylene amide, acryloylglycine amide, acryloylasparagine amide, acryloylsarcosine amide, methacrylsarcosine amide, acroylnipecotamide, and acroylmethyluracil may be preferably used.

Specifically, a copolymer of N-acryloyl glycine amide-N-acryloyl asparagine amide (2 : 1) having the upper limit critical solution temperature of 8°C, N-isopropyl acrylamide having the lower limit critical solution temperature of 32°C, and N-acetyl acrylamide-methacrylamide copolymer (1 : 12) having the upper limit critical solution temperature of 21°C are preferable.

The molecular weight of the temperature responsive polymer of the present invention is not particularly limited, and since the properties such as a critical solution temperature of temperature responsive polymer are hardly dependent on the molecular weight, a polymer compound having a weight average molecular weight of 5,000 or higher is sufficient. It is preferable to use a polymer compound having a weight average molecular weight of 5,000 to 100,000.

The temperature responsive polymer used in the invention may be a temperature responsive polymers synthesized by a known method, or commercially available temperature responsive polymers may be used. Typical examples of the commercially available temperature responsive polymer include PNIPAM (MW 10000 to 15000, MW 19000 to 26000), PNIPAM-amine terminated (Mn 2500, 5500), PNIPAM-carboxylic acid terminated (Mn 2000, 5000, 7000), PNIPAM-maleimide terminated (Mn 2000, 5000), PNIPAM-NHS ester terminated (Mn 2000), and N-isopropylacrylamide manufactured by Sigma Aldrich Japan Company.

According to the present invention, a content of the temperature responsive polymer in the layer is preferably 90% by mass or more, and more preferably 95% by mass or more of the total binder mass in the layer.

According to the present invention, the temperature responsive polymer may be included in any one layer of the high refractive index layer and the low refractive index layer. However, the temperature responsive polymer is preferably included in the high refractive index layer. More preferably, the temperature responsive polymer having the lower limit critical temperature is included in any one of the high refractive index layer and the low refractive index layer and a temperature responsive polymer having the upper limit critical solution temperature is included in the other of the high refractive index layer or the low refractive index, layer. For a case in which one layer (for example, a high refractive index layer) includes the temperature responsive polymer but the other layer (for example, a low refractive index layer) does not include a temperature responsive polymer, a cellulose compound, a polyvinyl acetal resin, a water soluble binder or the like that will be described below may be preferably used in the other layer.

(2) Cellulose compound

According to the embodiment (ii) of the invention, the high refractive index layer may include a cellulose compound as a binder component. The low refractive index layer may also include a cellulose compound as a binder component.

The average polymerization degree of the cellulose compound used in the invention is not particularly limited, but for example, it is preferably 50 to 8000, more preferably 100 to 7000, and still more preferably 200 to 6000.

The cellulose compound used in the invention is preferably inner-plasticized cellulose compound, and a cellulose compound which is inner-plasticized with alcohol, carboxylic acid, or isocyanate is more preferable.

Accordingly, examples of the inner-plasticized cellulose compound include cellulose ester, cellulose carbamate and cellulose ether. Among them, from the viewpoint of not being easily dissolved with a polyvinyl acetal resin, cellulose ester and cellulose ether are preferable. Cellulose ester is more preferable. Although the cellulose compound may be outer-plasticized by also using with a plasticizer, inner-plasticization of the cellulose compound is preferable. For the cellulose compound, the aforementioned compound may be used either singly or in combination of two or more types.

The cellulose ester may be either organic acid ester or inorganic acid ester.

Examples of organic acid esters include cellulose alkyl carboxylic acid ester and cellulose aromatic carboxylic acid ester. Examples of the cellulose alkyl carboxylic acid ester include cellulose C2-6 alkyl carboxylic acid ester such as cellulose acetate, cellulose propionate, cellulose butyrate, cellulose pentanoate, cellulose hexanoate, cellulose acetate propionate, cellulose acetate butyrate, cellulose acetate pentanoate, or cellulose acetate hexanoate; C1-6 alkyl cellulose C2-6 alkyl carboxylic acid ester such as methyl cellulose acetate or ethyl cellulose acetate; C1-6 haloalkyl cellulose C1-6 alkyl carboxylic acid ester such as dichloromethyl cellulose acetate, trichloromethyl cellulose propionate, or trifluoromethyl cellulose acetate; or the like. Examples of the cellulose aromatic carboxylic acid ester include cellulose C7-12 aromatic carboxylic acid ester such as cellulose phthalate, cellulose benzoate, or cellulose-4-methyl benzoate; or the like.

Examples of the inorganic acid ester include cellulose phosphoric acid and cellulose sulfuric acid. The cellulose ester may be ester of mixture acid having an organic acid and an inorganic acid.

Among them, as for the cellulose ester, cellulose C2-6 alkyl carboxylic acid ester is preferable, and among them, acetyl C3-6 acyl cellulose (cellulose acetate C3-C6 alkyl carboxylic acid ester) such as cellulose acetate propionate (acetylpropanoyl cellulose), cellulose acetate butyrate (acetylbutanoyl cellulose), cellulose acetate pentanoate (acetylpentanoylcellulose), or cellulose acetate hexanoate (acetylhexanoyl cellulose) is more preferable. Accordingly, the transparency of the infrared shielding film to be obtained may be further enhanced.

Examples of the cellulose carbamate include cellulose C1-6 alkyl carbamate such as cellulose ethylcarbamate; cellulose C6-12 aryl carbamate such as cellulose phenylcarbamate; C1-6 alkyl cellulose C1-6 alkyl carbamate (cellulose ether carbamate) such as ethyl cellulose propylcarbamate; and C1-6 alkyl cellulose C6-12 aryl carbamate (cellulose ether carbamate) such as ethyl cellulose phenylcarbamate; and the like.

Among them, C1-6 alkyl cellulose C6-12 aryl carbamate (cellulose ether carbamate) such as ethyl cellulose phenylcarbamate is preferable as the cellulose carbamate.

Examples of the cellulose ether include C1-10 alkyl cellulose such as methyl cellulose, ethyl cellulose, propyl cellulose, or pentyl cellulose; cyano C1-10 alkyl cellulose such as cyanoethyl cellulose or cyanopropyl cellulose; C6-12 aryl-C1-4 alkyl cellulose (aralkyl cellulose) such as benzyl cellulose; and the like.

Among them, cyano C1-10 alkyl alcohol such as cyanoethyl cellulose or cyanopropyl cellulose is preferable as the cellulose ether.

An average substitution degree of the cellulose compound is preferably 1 to 3, more preferably 1. 3 to 3, still more preferably 1.5 to 3, and most preferably 2 to 3. Meanwhile, the ratio between acetyl group and C3-6 acyl group in the acetyl C3-6 acylcellulose is preferably such that acetyl/C3-6 acyl (molar ratio) = 90/10 to 5/95, for example. It is more preferably 70/30 to 10/90, and still more preferably 50/50 to 15/85.

Plasticization of the cellulose compound includes (a) a method of reacting cellulose with carboxylic acid, alcohol, or isocyanate as a soft component and introducing, for example, a propyl group or a propionate group to the cellulose for inner-plasticization, (b) a method of adding a plasticizer to (b) cellulose (cellulose compound) for outer plasiticization, and (c) a method of combining the methods (a) and (b). The plasticizer to be used will be described below.

The cellulose compound used in the invention may be cellulose compounds synthesized using cellulose by a known method or commercially available cellulose compounds may be used. Typical examples of the commercially available cellulose compounds include, as hydroxyl ether cellulose manufactured by Daicel Fine Chem Ltd., product name SP200 (molecular weight of 200, a dispersion type), SP400 (molecular weight of 400, a dispersion type), SP500 (molecular weight of 500, a dispersion type), SP600 (molecular weight of 600, a dispersion type), SP850 (molecular weight of 850, a dispersion type), SP900 (molecular weight of 900, a dispersion type), EP850 (molecular weight of 850, a dissolved type), SE400 (molecular weight of 400, a dispersion improved type), SE500 (molecular weight of 500, a dispersion improved type), SE600 (molecular weight of 600, a dispersion improved type), SE850 (molecular weight of 850, a dispersion improved type), SE900 (molecular weight of 900, a dispersion improved type), and EE820 (molecular weight of 820, a dissolved type), and HEC manufactured by Sumitomo Seika Chemicals Company, Limited.

(3) Polyvinyl acetal resin

According to the embodiment (ii) of the invention, the high refractive index layer may include a polyvinyl acetal resin as a binder component. The low refractive index layer may also include a polyvinyl acetal resin as a binder component.

The polyvinyl acetal resin used in the invention is a polyvinyl acetal resin obtained by (acetalization of polyvinyl alcohol with aldehyde having 1 to 10 carbon atoms.

The weight a verage molecular weight of the polyvinyl acetal resin which is used in the invention is preferably 90,000 to 400,000, more preferably 90,000 to 370,000, and still more preferably 90,000 to 340, 000. When the weight average molecular weight is within the range, viscosity of the coating liquid for the high refractive index layer does not increase too much during the production, the favorable coatability is yielded and the performance of the infrared shielding film obtained is also favorable.

Examples of the polyvinyl acetal resin include Polyvinyl formal, polyvinyl ethanal, polyvinyl propanal, polyvinyl butyral (polyvinyl butanal), polyvinyl valeral, polyvinyl hexal, polyvinyl heptanal, polyvinyl 2-ethyl hexal, polyvinyl cyclohexal, polyvinyl glutal, polyvinyl benzal, polyvinyl 2-methyl benzal, polyvinyl 3-methyl benzal, polyvinyl 4-methyl benzal, polyvinyl p-hydroxy benzal, polyvinyl m-hydroxy benzal, polyvinylphenyl acetal, and polyvinyl β-phenyl propanal.

Among them, a resin resulting from acetalization with C1-5 aldehyde (formaldehyde, acetaldehyde, propionaldehyde, butylaldehyde, and valeraldehyde), that is, polyvinyl formal, polyvinyl ethanal, polyvinyl propanal, polyvinyl butyral, and polyvinyl valeral are preferable. A resin resulting from acetalization with C2-4 aldehyde, that is, polyvinyl formal, polyvinyl ethanal, polyvinyl propanal, and polyvinyl butyral are more preferable. If necessary, two or more types of the polyvinyl acetal resin may be used in combination.

The acetalization degree of the polyvinyl acetal resin which is used in the invention is preferably 40 to 85% by mol, more preferably 55 to 80% by mol, and still more preferably 60 to 75% by mol. The acetalization degree can be measured by infrared absorption spectrum (IR) method. For example, it may be measured by using FT-IR (FREEEXACT-II, FT-720, manufactured by HORIBA, Ltd.).

A hydroxyl group content of the polyvinyl acetal resin which is used in the invention is preferably 15 to 35% by mol. When the hydroxyl group content is within the range, the infrared shielding film obtained has favorable adhesiveness to the cellulose compound and favorable flexibility.

The polyvinyl acetal resin may be produced by acetalization of polyvinyl alcohol with aldehyde as described above. The polyvinyl alcohol is generally obtained by saponification of polyvinyl acetate and polyvinyl alcohol of saponification degree of 80 to 99.8% by mol is generally used. Polymerization degree of the Polyvinyl alcohol is preferably 200 to 4000, more preferably 500 to 3000, and still more preferably 1000 to 2500. When the polymerization degree is within the range, the infrared shielding film obtained has favorable flexibility and durability.

Examples of the aldehyde for acetalization of polyvinyl alcohol include, although not particularly limited, formaldehyde, acetaldehyde, propionaldehyde, butylaldehyde, amylaldehyde, hexylaldehyde, heptylaldehyde, 2-ethylhexylaldehyde, cyclohexylaldehyde, furfural, glyoxal, glutaraldehyde, benzaldehyde, 2-methylbenzaldehyde, 3-methylbenzaldehyde, 4-methylbenzaldehyde, p-hydroxybenzaldehyde, m-hydroxybenzaldehyde, phenylacetaldehyde, and $\beta$-phenylpropionaldehyde. Among them, C1-5 aldehyde (formaldehyde, acetaldehyde, propionaldehyde, butylaldehyde, and amylaldehyde) is preferable, and C2-4 aldehyde (acetaldehyde, propionaldehyde, and butylaldehyde) is more preferable. It is preferably used either singly or in combination of them.

The polyvinyl acetal resin used in the invention may be polyvinyl acetal resins synthesized by the aforementioned method or commercially available polyvinyl acetal resins may be used. Typical examples of the commercially available polyvinyl acetal include, as polyvinyl butyral, DENKABUTYRAL 3000-1 (average polymerization degree of about 600), 5000-A (average polymerization degree of about 2000), 6000-C (average polymerization degree of about 2400), 6000-CS (average polymerization degree of about 2400)(all trade names, manufactured by DENKI KAGAKU KOGYO KABUSHIKI KAISHA), and as polyvinyl acetal, S-LEC BX-1 (acetalization degree of about 66% by mol), BX-5 (acetalization degree of about 66% by mol), KS-5 (acetalization degree of about $74\pm3$ by mol)(all trade names, manufactured by Sekisui Chemical Company, Limited).

(4) Other binder

According to the invention, the high refractive index layer and the low refractive index layer may include a binder component (polymer compound) other than the aforementioned temperature responsive polymer, cellulose compound, or polyvinyl acetal resin as a binder component.

The polymer compound is not particularly limited as long as it has no influence on the effect of the invention. Examples of the polymer compound include a water soluble binder, a polymer such as polyester or polyurethane, and a polymer containing a reactive functional group such as polyacrylic acid ester. The polymer compound may be used either singly or in combination of two or more types. A synthesized product or a commercially available product may be used as the polymer compound.

(Water soluble binder)

In the present invention, a water soluble binder may be used as other binder. It is sufficient that the water soluble binder is a polymer compound which has water solubility (25°C) of 0.1% by mass or more and weight average molecular weight of 5,000 or higher. For example, various polysaccharides and polymer having a reactive functional group such as gelatin, polyvinyl alcohol having saponification degree of 85% or higher (for example, PVA235), polyvinyl pyrrolidone, $\beta$ 1,4-glucan (for example, carboxymethyl cellulose and carboxy ethyl cellulose), galactans (for example, agarose and agaropectin), galactomannoglycan (for example, locust bean gum and guaran), xyloglucan (for example, tamarind seed gum), glucomanno glycans (for example, arum mannan, wood origin glucomannan and xanthan gum), galactoglucomanno glycans (for example, glycan of needle-leaf tree origin), arabino galacto glycan (for example, glycan of soybean origin and glycan of microbe origin), glucorhamno glycans (for example, gellan gum), glycosamino glycans (for example, hyaluronic acid and keratin sulfate), alginic acid and alginate, agar, and natural polymer polysaccharides originating from red algae such as $\kappa$-carragheenan, $\lambda$-carragheenan, $\tau$-carragheenan and furcelleran can be used.

(Polymer having reactive functional group)

Examples of the polymer having a reactive functional group used in the invention include modified polyvinyl alcohols (for example, those having cationic, anionic, or non-ionic modified terminal), polyurethanes, acrylic resins such as polyacrylic acid, acrylic acid-acrylonitrile copolymer, potassium acrylate-acrylonitrile copolymer, vinyl acetate-acrylic ester copolymer, or acrylic acid-acrylic acid ester copolymer; styrene-acrylic acid resins such as styrene-acrylic acid copolymer, styrene-methacrylic acid copolymer, styrene-methacrylic acid-acrylic acid ester copolymer, styrene-$\alpha$-methyl styrene-acrylic acid copolymer or styrene-$\alpha$-methyl styrene-acrylic acid-acrylic acid ester copolymer; styrene-sodium styrene sulfonate copolymer, styrene-2-hydroxyethyl acrylate copolymer, styrene-2-hydroxyethyl acrylate-potassium styrene sulfonate copolymer, styrene-maleic acid copolymer, styrene-maleic anhydride copolymer, vinyl naphthalene-acrylic acid copolymer, vinyl naphthalene-maleic acid copolymer; and vinyl acetate based copolymers such as vinyl acetate-maleic acid ester copolymer, vinyl acetate-crotonic acid copolymer, and vinyl acetate-acrylic acid copolymer; and salts thereof.

When the polymer having a reactive functional group is a copolymer, type of the copolymer can be any one of a block copolymer, a random copolymer, a graft copolymer, and an alternating copolymer.

<Metal oxide particles (high refractive index layer)>

The high refractive index layer of the invention includes metal oxide particles.

As for the metal oxide particles used in the high refractive index layer of the invention, it is preferable to use the metal oxide particles having the refractive index of 2.0 or higher and an average particle diameter of 100 nm or less from the viewpoint of ensuring visible light transmittance of the film. Examples of the metal oxide particles include zirconium oxide particles, cerium oxide particles, and titanium oxide particles. Inparticular, from the viewpoint of improving the refractive index and improving infrared reflectance, it is preferable to use zirconium oxide particles or titanium oxide particles. Titanium oxide particles are more preferable.

According to the preferred embodiment of the high refractive index layer of the invention, the metal oxide particles with an average particle diameter of 100 nm or less are included.

A content of the metal oxide particles in the high refractive index layer is preferably 15 to 70% by mass, more preferably 20 to 65% by mass, and still more preferably 30 to 60% by mass of the total mass of the high refractive index layer (mass of the solid part).

When titanium oxide particles are used as the metal oxide particles that are included in the high refractive index layer of the invention, rutile type (tetragonal type) titanium oxide particles with an average particle diameter of 100 nm or less are preferable.

The metal oxide particles of the invention are preferably the metal oxide particles having oil-coated surface, because performances including infrared shielding property and visible light transmittance may be maintained over time. Inparticular, when the high refractive index layer includes any one of a cellulose compound or a polyvinyl acetal resin as a binder component, it is preferable that the titanium oxide particles be coated with oil.

An average particle diameter of the metal oxide particles used in the invention is preferably 100 nm or less, and more preferably 4 to 100 nm. Still more preferably, it is 4 to 50 nm, and particularly preferably 4 to 40 nm. When the average particle diameter is 100 nm or less, haze is small then the visible light transmittance is excellent. Without being limited to the invention, the metal oxide particles with an average particle diameter greater than 100 nm are not suitable for use in the high refractive index layer.

The average particle diameter described herein means the volume average particle diameter of the primary particles or the secondary particles dispersed in a medium, and it can be measured by an electronic microscope, a laser diffraction/scattering method, or a dynamic light scattering method.

Specifically, the particles themselves or the particles exposed on a cross-section or a surface of the refractive index layer are observed by an electron microscope, particle diameters of arbitrary 1, 000 particles are measured. And, when a volume per single particle is vi, for the group of the metal oxide particles in which the number of n1, n2···ni···nk, respectively, of particles having particle diameter of d1, d2···di···dk, respectively, are present, the average particle diameter weighted with the volume represented as, volume average particle diameter $mv = \{\sum(vi \cdot di)\}/\{\sum(vi)\}$, is calculated.

Further, the metal oxide particles used in the invention are preferably monodispersed. As described herein, "monodispersed" indicates that the monodispersity obtained by the following equation is 40% or less. The mono-dispersity is more preferably 30% or less, and particularly preferably 0.1 to 20%.]

[Equation 1]

$$\text{Monodispersity} = (\text{Standard deviation of particle diameters})/(\text{Average value of particle diameters}) \times 100$$

(Method for producing titanium oxide particles)

Hereinafter, the method for producing titanium oxide particles that are preferably used in the invention will be described.

As for the titanium oxide particles used in the invention, when preparing a aqueous coating liquid for forming a high refractive index layer, it is preferable to use a aqueous titanium oxide sol which has a pH of 1.0 to 3.0 and includes titanium particles with a positive zeta potential. It is more preferable to use the aqueous titanium oxide sol with hydrophobicized surface to disperse them in an organic solvent.

As for the method for producing the aqueous titanium oxide sol which may be used in the invention, references may be made to the descriptions included in JP 63-17221 A, JP 7-819 A, JP 9-165218 A, JP 11-43327 A, JP 63-17221 A, JP 7-819 A, JP 9-165218 A, and JP 11-43327 A.

Other examples of the method for producing the titanium oxide particles used in the invention may be referred to p 255-258 (2000) in "Titanium oxide - physical properties and applied technology" by Manabu SEINO, published by Gihodo Shuppan Co., Ltd., and Method in Process (2) described in paragraph 0011 to 0023 of WO2007/039953.

The production method by the above process (2) includes a prowess (1) of treating a titanium dioxide hydrate with at least one kind of basic compounds selected from the group consisting of the hydroxide of an alkali metal and the hydroxide of an alkaline earth metal as described in paragraphs 0011 to 0016 of WO2007/039953, and thereafter a process (2) of treating the obtained titanium dioxide dispersion with a carboxylic acid group-containing compound and an inorganic acid. In the present invention, the aqueous sol of the titanium oxide with a pH of 1.0 to 3.0 adjusted with the inorganic acid, which is obtained by the process (2), can be used.

As for the method of hydrophobicizing the surface of the aqueous titanium oxide sol to make it dispersible in an organic solvent, it is possible that the surface of the aqueous sol is treated with an aliphatic compound, which is a low molecular weight compound having a group interacting with the surface, for modification and hydrophobization of the surface.

To treat the surface of the aqueous sol with a low molecular weight compound for modification, for example, it is possible to mix and contact a dispersion of the aqueous sol with a low molecular weight compound having a group interacting with the surface of the aqueous sol.

As for the dispersion medium used for a dispersion liquid of the aqueous sol that is used, water, alcohol, a mixture solvent of water and alcohol, or a mixture solvent of water or/and alcohol, and an organic solvent other than alcohol is preferably used. Examples of the alcohol include methanol, ethanol, propyl alcohol, isopropyl alcohol, and butanol. Examples of the organic solvent which is preferably used include toluene, ethyl acetate, isobutyl acetate, butyl acetate, ethyl propionate, ethylene glycol monomethyl ether acetate, propylene glycol monomethyl ether acetate, acetone, methyl ethyl ketone, methyl isobutyl ketone, cyclohexanone, ethylene glycol monomethyl ether, ethylene glycol monomethyl ether, and propylene glycol monomethyl ether.

As for the low molecular weight compound for modifying the surface, it is not limited as long as it is an aliphatic compound having a group interacting with the surface. By having a group interacting with the surface, it is bound or adsorbed to the surface by mixing. Examples thereof include a compound having a carboxy group, a sulfonic acid group, a hydroxyl group, a thiol group, or an amino group. Specific examples thereof include acetic acid, propionic acid, valeric acid, capronic acid, caprylic acid, capric acid, lauric acid, myristic acid, palmitic acid, stearic acid, arachidinic acid, behenic acid, arachidonic acid, acrylic acid, methacrylic acid, oleic acid, glycolic acid, lactic acid, tartaric acid, glutaric acid, citric acid, methanesulfonic acid, ethanesulfonic acid, butanesulfonic acid, octanesulfonic acid, methanethiol, ethanethiol, butanethiol, propylamine, butylamine, hexylamine, and dodecylamine. A compound having a carboxy group or an amino group is preferably used.

The used ratio of the titanium oxide particles and the low molecular weight compound is, in terms of mass ratio of titanium oxide particles/low molecular weight compound, preferably 100/1 to 1/300, more preferably 10/1 to 1/100, and still more preferably 5/1 to 1/50.

By dispersing the particles obtained as described above in an organic solvent, a dispersion liquid is obtained. Herein, examples of the organic solvent which may be used include an organic solvent with boiling point of about 30 to 150°C, for example, methanol, ethanol, propyl alcohol, isopropyl alcohol, butanol, ethyl acetate, isobutyl acetate, butyl acetate, ethyl propionate, ethylene glycol monomethyl ether acetate, propylene glycol monomethyl ether acetate, acetone, methyl ethyl ketone, methyl isobutyl ketone, cyclohexanone, ethylene glycol monomethyl ether, ethylene glycol monoethyl ether, and propylene glycol monomethyl ether.

(Method for producing titanium oxide particles with oil coated surface)

The titanium oxide particles with oil coated surface of the invention are obtained by further dispersing the dispersion liquid including the aqueous sol and the low molecular weight compound as described above with oil. Since the surface of the titanium oxide particles is hydrophobicized, it has affinity to oil, and thus, upon mixing with oil, the oil is adsorbed onto the surface in an organic medium for coating the surface.

As described herein, the coating preferably means covering of at least 80% of the surface of the titanium oxide particles. More preferably, the coating means covering of at least 90%, and still more preferably it means 100% covering.

Accordingly, a dispersion liquid of the titanium oxide particles of which surface is efficiently covered with oil may be stably obtained.

As an oil, a solvent with high boiling point which is substantially insoluble in water (water solubility of 5% or less (25°C)) and has boiling point of about 160°C or higher, and preferably 180°C or higher under atmospheric pressure is used. As for the solvent with high boiling point, those described in US Patent No. 2,322,027, for example, alkyl phthalate ester (dibutyl phthalate, dioctyl phthalate, or the like), phosphate ester (triphenyl phosphate, tricresyl phosphate, and dioctylbutyl phosphate), citrate ester (for example, tributyl acetyl citrate), benzoate ester (for example, octyl benzoate), alkyl amide (for example, diethyl lauryl amide), fatty acid esters (for example, dibutoxy ethyl succinate, diethyl azelate), trimesiate acid esters (for example, tributyl trimesiate) and polyorganosiloxane can be used. In particular, the esters having a boiling point of 180°C or higher under atmospheric pressure, and among them, esters such as phthalic acid alkyl ester or phosphoric acid ester, are preferable.

The used ratio of the titanium oxide particles and the oil (a solvent with high boiling point) is, in terms of titanium oxide particles/oil (a solvent with high boiling point), preferably 10/1 to 1/10 (mass ratio), and more preferably 5/1 to 1/5.

The disperser for producing the dispersion liquid which may be used include a dissolver of ultrasonication type or high stirring type, a homo mixer, a homo blender, a homogenizer, a manton gaulin, and a colloid mill.

By using the titanium oxide particles with oil coated surface of the invention, it is concluded that stress is relieved by the oil and structural changes inside the film are suppressed over time, and as a result, performance including the infrared shielding property and visible light transmission are further stabilized over time.

Even when the titanium oxide particles have a modified and/or coated surface, the particle diameter is almost the same as that of the titanium oxide particles used, and the preferred range of the particle diameter is also the same.

<Metal oxide particles (low refractive index layer)>

The low refractive index layer of the invention preferably includes the metal oxide particles. As for the metal oxide particles, silicon dioxide is preferably used, and synthetic non-crystalline silica and colloidal silica may be exemplified. It is particularly preferable to use colloidal silica sol dispersed in an organic solvent.

In the invention, it is preferable that silicon dioxide have an average particle diameter of 3 to 100 nm. The average particle diameter of the primary particles of silicon dioxide that are dispersed in a state of primary particles (particle diameter in dispersion state before coating) is more preferably 3 to 20 nm, and still more preferably 4 to 10 nm. The average particle diameter of the secondary particles is preferably 30 nm or less from the viewpoint of having excellent visible light transmission due to low haze.

The average particle diameter of the metal oxide particles that are used in the low refractive index layer of the invention is measured by observing the particles themselves or the particles which appears on a cross-section or a surface of the refractive index layer by an electron microscope, measuring particle diameter of arbitrary 1,000 particles, and obtaining the simple average value thereof (number average value) . Herein, the particle diameter of each particle represents a diameter of a circle assumed to be the same as the reflected area.

Particularly preferably used colloidal silica is obtained by heating and aging silica sol that is obtained by metathesis reaction with acid or the like or by passing through an ion exchange resin layer of sodium silicate, and it is described in JP 57-14091 A, JP 60-219083 A, JP 60-219084 A, JP 61-20792 A, JP 61-188183 A, JP 63-17807 A, JP 4-93284 A, JP 5-278324 A, JP 6-92011 A, JP 6-183134 A, JP 6-297830 A, JP 7-81214 A, JP 7-101142 A, JP 7-179029 A, JP 7-137431 A, or International Publication No. 94/26530 pamphlet or the like.

As for the colloidal silica, a synthesized product may be used or a commercially available product may be used.

The surface of the colloidal silica may be cation-modified or treated with Al, Ca, Mg, or Ba.

A content of the metal oxide particles in the low refractive index layer of the invention is preferably 15 to 90% by mass, and more preferably 40 to 80% by mass of the total mass of the low refractive index layer (mass of the solid part).

<Other additives>

In the high refractive index layer and the low refractive index layer of the invention, various additives may be used, if necessary.

(1) Plasticizer

Examples of the plasticizer which is used in the invention include an organic ester plasticizer such as monobasic organic acid ester or polybasic organic acid ester and a phosphoric acid plasticizer such as organic phosphoric acid plasticizer or organic phosphorus acid plasticizer. The plasticizer is preferably a liquid plasticizer.

Examples of the monobasic organic acid ester include, although not particularly limited, glycol ester obtained by a reaction of glycol such as triethylene glycol, tetraethylene glycol, or tripropylene glycol and monobasic organic acid such as butyric acid, isobutyric acid, capronic acid, 2-ethylbutyric acid, heptyl acid, n-octyl acid, 2-ethylhexyl acid, pelargonic acid (n-nonyl acid), or decyl acid. Among them, triethylene glycol dialkyl acid ester such as triethylene glycol dicapronic acid ester, triethylene glycol-di-2-ethylbutyric acid ester, triethylene glycol-di-n-octyl acid ester, and triethylene glycol-di-2-ethylhexyl acid ester is preferable.

Examples of the polybasic organic acid ester include, although not particularly limited, an ester compound of polybasic organic acid such as adipic acid, sebacic acid, and azellaic acid and an alcohol having a linear or branched structure with 4 to 8 carbon atoms. Among them, dihexyl adipate, dibutylsebacic acid ester, dioctylazellaic acid ester, dibutylcarbitol adipic acid ester, or the like are preferable.

Examples of the organic ester plasticizer include, although not particularly limited, triethylene glycol-di-2-ethylbutyrate, triethylene glycol-di-2-ethylhexanoate, triethylene glycol dicaprylate, triethylene glycol-di-n-octanoate, triethylene glycol-di-n-heptanoate, tetraethylene glycol-di-2-ethylhexanoate, tetraethylene glycol-di-n-heptanoate, dibutylsebacate, dioctylazellate, dibutylcarbitol adipate, ethylene glycol-di-2-ethylbutyrate, 1,3-propylene glycol-di-2-ethylbutyrate, 1,4-butylene glycol-di-2-ethylbutyrate, diethylene glycol-di-2-ethylbutyrate, diethylene glycol-di-2-ethylhexanoate, dipropylene glycol-di-2-ethylbutyrate, triethylene glycol-di-2-ethylpentanoate, tetraethylene glycol-di-2-ethylbutyrate, diethylene glycol dicapriate, triethylene glycol-di-n-heptanoate, tetraethylene glycol-di-n-heptanoate, triethylene glycol diheptanoate, tetraethylene glycol diheptanoate, dihexyl adipate, dioctyl adipate, hexylcyclohexyladipate, a mixture of heptyl adipate and nonyl adipate, diisononyl adipate, heptyl nonyl adipate, dibutyl sebacate, oil-modified sebacic acid alkyd, and a mixture of phosphoric acid ester and adipic acid ester.

Examples of the organic phosphoric acid plasticizer include, although not particularly limited, tributoxyethyl phosphate, isodecyl phenyl phosphate, and triisopropyl phosphate.

(2) Coating aid

As for the coating aid used in the invention, a siloxane based surfactant may be used, for example. Polyether modified polydimethylsiloxane is preferable. Specific examples of the polyether modified polydimethylsiloxane include a polydimethylsiloxane modified with polyethylene oxide, polypropylene oxide, polybutylene oxide, polydimethylsiloxane or their mixture. The polyether modified polydimethylsiloxane is obtained by suitably varying the amounts or mixing ratio of polyethylene oxide, polypropylene oxide, or polybutylene oxide.

The siloxane based surfactant may be obtained as a commercially available product, and examples of the siloxane based surfactant include BYK-302, BYK-306, BYK-307, BYK-320, BYK-323, BYK-330, BYK-331, BYK-333, BYK-337, BYK-340, BYK-344, BYK-370, BYK-375, BYK-377, and BYK-UV3500 manufactured by BYK Japan KK, KF-945, KF-352A, KF-640, KF-351A, KF-354L, X-22-4272, and X-22-6266 manufactured by Shin-Etsu Chemical Co., Ltd., and EFKA-3030, EFKA-3031, EFKA-3034, EFKA-3299, EFKA-3232, EFKA-3288, EFKA-3033, EFKA-3035, EFKA-3580, EFKA-3883, EFKA-3239, EFKA-3236, and EFKA-3522 manufactured by EFKA. The addition amount of the siloxane based surfactant is preferably 0.01 to 10% by mass, and more preferably 0.05 to 2.0% by mass with respect to the solid part.

(3) Amino acid with isoelectric point of 6.5 or less

As described herein, the amino acid refers to a compound which has an amino group and a carboxyl group in the same molecule. Any type of amino acid such as $\alpha$-, $\beta$-, and $\gamma$-type may be applicable, but the amino acid is characterized with having an isoelectric point of 6.5 or less. Although an optical isomer exists in some amino acid, in the present invention, there is no difference of the effect by optical isomers, and thus any isomer can be used independently or in a racemic form.

The detailed description about an amino acid applicable to the present invention can be referred to Kagaku Daijiten 1, reduced edition (Kyoritsu Shuppan Co., Ltd.; published in 1960), pages 268 to 270.

Specific examples of the preferred amino acid include asparaginic acid, glutamic acid, glycine, and serine. Glycine and serine are particularly preferable.

A particular pH balances positive and negative charges in an amino acid molecule, yielding overall charge of 0, and such pH value corresponds to an isoelectric point of an amino acid. Although in the present invention an amino acid with isoelectric point of 6.5 or less is used, the isoelectric point of each amino acid may be measured by isoelectric focusing electrophoresis at low ionic strength.

(4) Emulsion resin

According to the invention, the high refractive index layer or the low refractive index layer of the invention may also include an emulsion resin.

The emulsion resin used in the invention indicates resin microparticles obtained by maintaining an oil soluble monomer in an emulsion state in an aqueous solution including a dispersion agent and emulsion polymerizing it with a polymerization initiator.

Examples of the dispersion agent used for polymerization of an emulsion include a low molecular weight dispersion agent such as alkyl sulfonate, alkyl benzenesulfonate, diethylamine, ethylene diamine, and quaternary ammonium salt, and a high molecular weight agent such as polyvinyl pyrrolidone.

The emulsion resin according to the invention indicates a resin dispersed in an aqueous medium, for example, tiny resin particles with an average particle diameter of 0.01 to 2.0 $\mu$m are dispersed in an emulsion state, and it is obtained by emulsion polymerization of an oil soluble monomer using a high molecular weight dispersion agent with a hydroxyl group. Although there is no basic difference exhibited in the polymer components of the emulsion resin obtained depending on the type of the dispersion agent used, when emulsion polymerization is carried out using a high molecular weight dispersion agent having a hydroxyl group, it is understood that the hydroxyl groups are present at least on the surface of microparticles, and thus chemical and physical properties of the emulsion are different from those of an emulsion resin polymerized by using other dispersion agent.

The high molecular weight dispersion agent having a hydroxyl group indicates a high molecular weight dispersion agent with weight average molecular weight of 10000 or higher, in which hydroxyl groups are substituted on a side chain or at a terminal, and examples thereof include a copolymerization product of an acrylic based polymer like sodium polyacrylate and polyacrylamide and 2-ethylhexylacrylate, and polyvinyl alcohol with saponification degree of 85% or higher. In particular, polyvinyl alcohol with saponification degree of 85% or higher is preferable.

The polyvinyl alcohol with saponification degree of 85% or higher which is used as a high molecular weight dispersion agent include, in addition to common polyvinyl alcohol obtained by hydrolysis of polyvinyl acetate, cation-modified polyvinyl alcohol or anion-modified polyvinyl alcohol having an anionic group like carboxyl group, and modified polyvinyl alcohol like silyl-modified polyvinyl alcohol having a silyl group. When the polyvinyl alcohol has average polymerization degree of 5000 or less, viscosity of the emulsion resin is not high, and thus it can be easily handled during the production. Thus, the average polymerization degree is preferably 300 to 5000, more preferably 1500 to 5000, and particularly preferably 3000 to 4500.

Examples of the resin which is used for emulsion polymerization to yield the aforementioned high molecular weight dispersion agent include a homopolymer of a copolymer of acrylic acid ester, methacrylic acid ester, an ethylene based monomer such as a vinyl based compound, or a styrene based compound, and a diene based compound such as butadiene or isoprene, and examples thereof include an acrylic resin, a styrene-butadiene based resin, and an ethylene-vinyl acetate based resin.

(5) Other additives

Various kinds of additives that can be appropriately added to the high refractive index layer and the low refractive index layer according to the invention are listed hereinafter. Various well-known additives can be mentioned, for example, such ultraviolet absorption agents described in JP 57-74193 A, JP 57-87988 A, and JP 62-261476 A; fading inhibitors described in JP 57-74192 A, JP 57-87989 A, JP 60-72785 A, JP 61-146591 A, JP 1-95091 A and JP 3-13376 A; various surfactants such as anionic, cationic or nonionic surfactants, optical whitening agents described in JP 59-42993 A, JP 59-52689 A, JP 62-280069 A, JP 61-242871 A, and JP 4-219266 A; pH adjusters such as sulfuric acid, phosphoric acid, acetic acid, citric acid, sodium hydroxide, potassium hydroxide, and potassium carbonate; defoaming agents, lubricants such as diethylene glycol, antiseptic agents, antifungal agents, antistatic agents, mattifying agents, heat stabilizing agents, anti-oxidizing agents, flame retardants, crystal nucleating agents, inorganic particles, organic particles, viscosity-lowering agents, lubricating agents, infrared absorbing agents, pigments, and dyes.

[Substrate]

With respect to a substrate used for the infrared shielding film of the present invention, the substrate is preferably a film substrate. The film substrate may be transparent or opaque and various resin films can be applicable. Specific examples thereof which may be used include polyolefin films (such as polyethylene or polypropylene), polyester films (such as polyethylene terephthalate or polyethylene naphthalate), polyvinyl chloride, and cellulose triacetate. The polyester film is preferable. The polyester film (hereinafter referred to as polyester) is not specifically limited, but it is preferably polyester which includes dicarboxylic acid component and diol component as main constituting components and has a film forming property. Examples of the dicarboxylic acid components as main composition components include: terephthalic acid, isophthalic acid, phthalic acid, 2,6-naphthalene dicarboxylic acid, 2,7-naphthalene dicarboxylic acid, diphenyl sulfone dicarboxylic acid, diphenyl ether dicarboxylic acid, diphenyl ethane dicarboxylic acid, cyclohexane dicarboxylic acid, diphenyl dicarboxylic acid, diphenyl thioether dicarboxylic acid, diphenyl ketone dicarboxylic acid, and phenyl indane dicarboxylic acid. Examples of the diol components include: ethylene glycol, propylene glycol, tetramethylene glycol, cyclohexane dimethanol, 2,2-bis(4-hydroxyphenyl)propane, 2,2-bis(4-hydroxyl ethoxy phenyl) propane, bis(4-hydroxy phenyl) sulfone, bisphenol fluorene dihydroxy ethyl ether, diethylene glycol, neopentyl glycol, hydroquinone, and cyclohexane diol. Of these polyester which have above as a main constituting component, in view of transparency, mechanical strength and dimensional stability, it is preferably polyester which contains terephthalic acid or 2,6-naphtalene dicarboxylic acid as dicarboxylic acid component and ethylene glycol or 1,4-cyclohexane dimethanol as diol component. Of these, preferred are polyesters containing polyethylene terephthalate or polyethylene naphthalate as main composition components, or a copolymerized polyester consisting of terephthalic acid, 2,6-naphthalene dicarboxylic acid and ethylene glycol, and mixture of two or more kinds of these polyesters as a main constituting component.

The thickness of the substrate according to the present invention is preferably 10 to 300 $\mu$m, and more preferably 20 to 150 $\mu$m. The substrate of the present invention may be a laminated film of two or more films. In this case, the kinds of films may be the same or different.

[Method for producing infrared shielding film]

The invention also provides a method for producing an infrared shielding film having at least one unit consisting of a high refractive index layer having metal oxide particles and a low refractive index layer on a substrate, in which (i) at least one layer of the high refractive index layer and the low refractive index layer is formed by using a coating liquid including a temperature responsive polymer, or (ii) the high refractive index layer is formed by using a coating liquid including any one of a cellulose compound and a polyvinyl acetal resin, and the low refractive index layer is formed by using a coating liquid including the other of a cellulose compound and a polyvinyl acetal resin.

The infrared shielding film of the invention is formed by laminating a unit consisting of a high refractive index layer and a low refractive index layer on a substrate. With regard to the method for producing the infrared shielding film of the invention, it is preferable that a coating liquid for forming the high refractive index layer and a coating liquid for forming the low refractive index layer are coated and dried by turns to form a laminate.

Specifically, the infrared shielding film according to the embodiment (i) of the invention is obtained by a production method including a step of coating a substrate with a coating liquid for forming the high refractive index layer including a temperature responsive polymer, metal oxide, and a solvent (hereinafter, also referred to as a "coating liquid for the high refractive index layer) and a coating liquid for forming the low refractive index layer including a binder component, a solvent, and if necessary, metal oxide particles (hereinafter, also referred to as a "coating liquid for the low refractive index layer), and a step of drying the substrate coated with the coating liquid.

The infrared shielding film according to the embodiment (ii) of the invention is obtained by a production method including a step of coating a substrate with a coating liquid for forming the high refractive index layer containing, as a main component of the binder component, any one of a cellulose compound and a polyvinyl acetal resin, metal oxide particles, and a solvent and a coating liquid for forming the low refractive index layer containing, as a main component of the binder component, the other of a cellulose compound and a polyvinyl acetal resin, a solvent, and if necessary, metal oxide particles, and a step of drying the substrate coated with the coating liquid.

More specific examples of the method include the followings for the embodiments (i) and (ii): for example, (1) a method of forming the infrared shielding film by coating and drying the coating liquid for the high refractive index layer on a substrate to form the high refractive index layer, and coating and drying the coating liquid for the low refractive index layer to form the low refractive index layer (successive coating); (2) a method of forming the infrared shielding film by coating and drying the coating liquid for the low refractive index layer on a substrate to form the low refractive index layer, and coating and drying the coating liquid for the high refractive index layer to form the high refractive index layer (successive coating); (3) a method of forming the infrared shielding film having the high refractive index layer and the low refractive index layer by successive multilayer coating of the coating liquid for the high refractive index layer and the coating liquid for the low refractive index layer by turns on a substrate and drying them (successive multilayer coating) ;

and (4) a method of forming the infrared shielding film having the high refractive index layer and the low refractive index layer by simultaneous multilayer coating of the coating liquid for the high refractive index layer and the coating liquid for the low refractive index layer and drying them (simultaneous multilayer coating); or the like.

Among them, since the flexibility of the film is stable over time, it is preferable that the coating liquid for the high refractive index layer and the coating liquid for the low refractive index layer be coated on a substrate by the simultaneous multilayer coating ((4) described above).

Examples of the coating method include, although not particularly limited, a roll coating method, a rod bar (wire bar) coating method, an air knife coating method, a spray coating method, a slide type curtain coating method, and a slide hopper (slide bead) coating method described in U. S. Pat. No. 2, 761, 419 and No. 2,761,791, or the like, and an extrusion coating method.

Further, as for the coating method for performing the simultaneous multilayer coating, an extrusion coating method, a slide hopper (slide bead) coating method, or a slid type curtain coating method is preferably used. Theextrusion coating method is more preferable.

Hereinafter, the simultaneous multilayer coating method as a preferred production method (coating method) of the present invention will be described in detail.

<Solvent>

The solvent used for producing the coating liquid for the high refractive index layer and the coating liquid for the low refractive index layer is not particularly limited. However, water, an organic solvent, or a mixture solvent thereof is preferable.

Examples of the organic solvent include alcohols such as methanol, ethanol, 2-propanol, or 1-butanol, esters such as ethyl acetate, butyl acetate, propylene glycol monomethyl ether acetate, or propylene glycol monoethyl ether acetate, ethers such as diethyl ether, propylene glycol monomethyl ether, or ethylene glycol monoethyl ether, amides such as dimethyl formamide or N-methyl pyrrolidone, and ketones such as acetone, methyl ethyl ketone, acetylacetone, or cyclohexanone. The organic solvent may be used either singly or as a mixture of two or more kinds.

From the viewpoint of environment, easy operability or the like, as a solvent for the coating liquid, water, or a mixture solvent of water and methanol, ethanol, acetone, methyl ethyl ketone, or ethyl acetate is preferable.

From the viewpoint of environmental problems, for the method for producing the infrared shielding film of the invention, in particular for the embodiment (i), the coating liquid in a aqueous system is preferable. As described herein, the expression "aqueous system" indicates a case in which water is included in an amount of 50% by mass or more in the coating liquid. Preferably, water is 80% by mass or more, and still more preferably water is 90% by mass or more. When the coating liquid is in an aqueous system, not only the environmental problems are solved but also production cost can be reduced and a light reflective film or the like having a large area can be produced.

<Concentration of coating liquid>

Concentration of the binder component (for example, the temperature responsive polymer, cellulose compound, or polyvinyl acetal resin) in the coating liquid for the high refractive index layer is preferably 1 to 10% by mass. In addition, the concentration of the metal oxide particles in the coating liquid for the high refractive index layer is preferably 1 to 50% by mass.

A concentration of the binder component (for example, the temperature responsive polymer, cellulose compound, or polyvinyl acetal resin) in the coating liquid for the low refractive index layer is preferably to 10% by mass. In addition, the concentration of the metal oxide particles in the coating liquid for the low refractive index layer is preferably 1 to 50% by mass.

In addition, it is preferable that each component of the high refractive index layer and the low refractive index layer (the temperature responsive polymer, cellulose compound or polyvinyl acetal resin, and the metal oxide particles) be added to the coating liquid such that it can have the content within the numerical range explained in the section for each layer.

<Method for preparing coating liquid>

The method for preparing the coating liquid for the high refractive index layer and the coating liquid for the low refractive index layer is not particularly limited. For example, there is a method of adding the temperature responsive polymer, cellulose compound or polyvinyl acetal resin, metal oxide particles, and other additives that are added if necessary, and mixing them by stirring. At that time, the addition order of the temperature responsive polymer, cellulose compound or polyvinyl acetal resin, metal oxide particles, and other additives that are added if necessary is not particularly limited. Each component may be added sequentially under stirring followed by mixing or they may be added all at once under stirring followed by mixing. If necessary, it is prepared to have suitable viscosity by further adding a solvent.

<Viscosity of coating liquid>

When simultaneous multilayer coating is performed by a slide hopper (slide bead) coating method, viscosity of the coating liquid for the high refractive index layer and the coating liquid for the low refractive index layer at 25°C is preferably in the range of 5 to 100 mPa·s and more preferably in the range of 10 to 50 mPa·s. When simultaneous multilayer coating is performed by a slide type curtain coating method, viscosity of the coating liquid for the high refractive index layer and the coating liquid for the low refractive index layer at 25°C is preferably in the range of 5 to 1200 mPa·s, and more preferably in the range of 25 to 500 mPa·s. When simultaneous multilayer coating is performed by an extrusion coating method, viscosity of the coating liquid for the high refractive index layer and the coating liquid for the low refractive index layer at 25°C is preferably in the range of 100 to 10,000 mPa·s, and more preferably in the range of 3, 000 to 8,000 mPa·s.

<Method for coating and drying>

According to the method for producing the infrared shielding film of the embodiment (i) of the invention, any one of coating liquid of the coating liquid for forming the high refractive index layer and the coating liquid for forming the low refractive index layer includes the temperature responsive polymer, the temperature of any one of coating liquid of the coating liquid for forming the high refractive index layer and the coating liquid for forming the low refractive index layer is lower than the critical solution temperature of the temperature responsive polymer, the temperature of the other coating liquid is equal to or higher than the critical solution temperature of the temperature responsive polymer, and by performing simultaneously multilayer coating and drying, the high refractive index layer and the low refractive index layer are formed.

At that time, when the temperature responsive polymer has the lower limit critical solution temperature, the temperature responsive polymer is preferably contained in a coating liquid set at the temperature lower than the critical solution temperature, and when the temperature responsive polymer has the upper limit critical solution temperature, the temperature responsive polymer is preferably included in a coating liquid set at the temperature which is equal to or higher than the critical solution temperature. "lower than the critical solution temperature" means that it is below the critical solution temperature, and for example, the temperature is lower than the critical solution temperature by 1 to 50°C, and preferably 2 to 30°C. On the other hand, "equal to or higher than the critical solution temperature" means that, for example, the temperature is higher than the critical solution temperature by 0.1 to 50°C, and preferably 1 to 30°C.

In other words, with regard to the coating and drying method according to the embodiment (i), in the coating liquid containing temperature responsive polymer of either of the coating liquid for the high refractive index layer and the coating liquid for the low refractive index layer, the temperature responsive polymer needs to be dissolved in the coating liquid. For such reasons, when the added temperature responsive polymer has the lower limit critical solution temperature, it needs to be set at the temperature lower than the critical solution temperature. On the other hand, when the added temperature responsive polymer has the upper limit critical solution temperature, it needs to be set at the temperature which is equal to or higher than the critical solution temperature. Further, depending on type of the added temperature responsive polymer, the surface temperature of the substrate to be coated is preferably set to have the temperature which is equal to or higher than the critical solution temperature when it has the lower limit critical solution temperature. On the other hand, it is preferably set to have the temperature lower than the critical solution temperature when the temperature responsive polymer has the upper limit critical solution temperature. As for the drying after coating, it is preferable that the drying be immediately performed at the temperature which is equal to or higher than the lower limit critical solution temperature (for example, 40 to 100°C, and preferably 50 to 85°C) when the added temperature responsive polymer has the lower limit critical solution temperature. When the added temperature responsive polymer has the upper limit critical solution temperature, it is preferable that the temperature of formed coating film be first cooled to the temperature lower than upper limit critical solution temperature (for example, 0 to 30°C, and preferably 0 to 15°C), drying at constant rate at the temperature lower than the upper limit critical solution temperature (for example, 0 to 30°C, and preferably 0 to 15°C), and drying it at the temperature which is equal to or higher than the upper limit critical solution temperature (for example, 40 to 100°C, and preferably 50 to 85°C).

According to the present invention, by utilizing the aforementioned properties of the temperature responsive polymer about temperature, it is understood that interlayer mixing during coating is suppressed and the interface is separated so that sufficient infrared reflectance can be ensured. Further, according to the invention, the most desirable results are obtained when the temperature of the coating liquid for the layer adjacent to the coating liquid containing the temperature responsive polymer is set to the temperature at which the temperature responsive polymer is not dissolved comparing to the critical solution temperature of the temperature responsive polymer and the simultaneous multilayer coating and drying is performed. For example, it means that the coating liquid for the layer adjacent to the coating liquid containing the temperature responsive polymer having the lower limit critical solution temperature is coated simultaneously at a temperature equal to or higher than the lower limit critical solution temperature, and the coating liquid for the layer adjacent to the coating liquid containing the temperature responsive polymer having the upper limit critical solution temperature is coated simultaneously at a temperature lower than the upper limit critical solution temperature. The drying after the coating is not particularly limited, and drying can be carried out at, for example, 40 to 100°C, and preferably 50 to 85°C. Accordingly, it was surprising to obtain more desirable results because the interface separation between adjacent layers is promoted more than a case of forming by successive coating and drying.

According to the method for producing the infrared shielding film by the embodiment (ii), the method for coating and drying is not particularly limited. However, it is preferable that, after simultaneous multilayer coating of the coating liquid for the high refractive index layer and the coating liquid for the low refractive index layer on a substrate, drying is performed at 30°C or higher. As for the drying method, hot air drying, infrared drying, or microwave drying is used. More preferred condition for drying is a condition to have film surface temperature in the range of 30 to 100°C. Drying by multi-step process is preferable than drying by single-step process, and it is more preferable that the temperature of an area at constant drying rate < the temperature of an area at decreasing drying rate. In such case, it is preferable that the temperature range of an area at constant drying rate is 30 to 60°C and the temperature range of an area at decreasing drying rate is 50 to 100°C.

With regard to the coating thickness of the coating liquid for the high refractive index layer and the coating liquid for the low refractive index layer, the coating can be made such that the desirable thickness after drying as described above is obtained.

[Infrared shielding body]

The infrared shielding film of the present invention is applicable to broad fields. For example, it is adhered to the equipment exposed to sunlight for a long period such as an outdoor window of the building or the car window, and it is used as a film for windowpane such as a heat ray reflective film which gives the heat ray reflective effect or a film for plastic houses for agriculture mainly for enhancing weather resistance.

The infrared shielding film of the present invention is particularly preferably used for a member which is adhered to the glass or the resin material alternative to the glass either directly or via adhesives.

Specifically, the invention also provides an infrared shielding body in which the infrared shielding film of the invention or the infrared shielding film obtained by the production method of the invention is formed on at least one surface of a substrate.

Specific examples of the substrate include glass, polycarbonate resin, polysulfone resin, acrylic resin, polyolefin resin, polyether resin, polyester resin, polyamide resin, polysulfide resin, unsaturated polyester resin, epoxy resin, melamine resin, phenol resin, diallyl phthalate resin, polyimide resin, urethane resin, polyvinyl acetate resin, polyvinyl alcohol resin, styrene resin, vinyl chloride resin, a metal plate, and ceramics. Type of the resin may be any one of a thermoplastic resin, a thermocuring resin, an ionizing radiation curing rein, and it may be used in combination of two or more types. The substrate used in the invention can be produced by a known method such as extrusion molding, calendar molding, injection molding, hollow molding, or compression molding.

The thickness of the substrate is, although not particularly limited, generally from 0.1 mm to 5 cm.

The adhesive layer or tacky layer for adhesion of the infrared shielding film of the invention to a substrate is preferably placed such that the infrared shielding film is in the incident side of sunlight (heat ray). It is preferable in view of having excellent durability to sandwich the infrared shielding film of the invention between a windowpane and a substrate, because it can be sealed from environmental gas such as moisture. The infrared shielding film of the present invention can be preferably installed in the outdoors or the outside of car (as outdoor application) because it has environmental durability.

As for the adhesives or tacky material which may be used in the present invention, the adhesives or tacky material including a light curing or heat curing resin as a main component can be mentioned.

As for the adhesives or tacky material, it is preferable to have resistance to UV rays, and acrylic based adhesives or silicone based adhesives are preferable. Furthermore, in view of adhesion characteristics and cost, it is preferably acrylic based adhesives. Since it is especially easy to control a peeling strength, solvent based and emulsion based acrylic adhesives are preferable and solvent based acrylic based adhesives are more preferable. In the case of using solution polymerized polymer as solvent based acrylic adhesives, well-known polymers can be used as a monomer.

Polyvinyl butyral based resin used as an intermediate layer in the laminated glass, or ethylene-vinyl acetate copolymer based resin can be used as the above adhesives or tacky materials. Specific examples thereof include plastic polyvinyl butyral (manufactured by Sekisui Chemical Co., Ltd. or Mitsubishi Monsanto Co.), ethylene-vinyl acetate copolymer (manufactured by Du Pont, Takeda Pharmaceutical Company, Ltd., Duramine), and modified ethylene vinyl acetate copolymer (manufactured by TOSOH CORP., Melthene G). An ultraviolet absorption agent, an anti-oxidizing agent, an antistatic agent, a heat stabilizer, a lubricant, a filler, a colorant, and an adhesion (tackiness) adjustment agent may be added suitably to the adhesive layer or tacky material layer.

Examples

Hereafter, although the invention will be described in more detail through the Examples, the invention is not limited to these examples. The expression of "part" or "%" referred in Examples represents "part by mass" or "% by mass", unless otherwise specified.

<Example I-1>

<<Production of infrared shielding film>>

[Preparation of 1-1]

(Preparation of coating liquid for high refractive index layer)

The following additives (1) to (4) were added in order and mixed to prepare the coating liquid for the high refractive index layer. As poly-N-n-propyl acrylamide, PNIPAM (weight average molecular weight of 19,000 to 26,000) manufactured by Sigma Aldrich Japan Company was used.

(1) 30% by mass sol of zirconium oxide particles (volume average particle diameter of 10 nm): 30 g
(2) 5.0% by mass aqueous solution of poly-N-n-propyl acrylamide: 200 g (lower limit critical solution temperature of 21°C)
(3) pure water: 150 g
(4) 5.0% by mass aqueous solution of surfactant: 0. 45 g (Nissan Cation 2-DB-500E, quaternary ammonium salt based cationic surfactant, manufactured by NOF Corporation).

(Preparation of coating liquid for low refractive index layer)

The following additives (1) to (4) were added in order and mixed to prepare the coating liquid for the low refractive index layer.

(1) 20% by mass sol of colloidal silica (volume average particle diameter of 6 nm): 68 g
(2) 5.0% by mass aqueous solution of polyvinyl alcohol (PVA235): 200 g
(3) pure water: 240 g
(4) 5.0% by mass aqueous solution of surfactant: 0.64 g (Nissan Cation 2-DB-500E, quaternary ammonium salt based cationic surfactant, manufactured by NOF Corporation).

(Laminate formation)

<Formation of high refractive index layer>

The coating liquid for the high refractive index layer produced above was kept at 18°C and coated by using a wire bar on a polyethylene terephthalate film (size: 27 cm × 21 cm) with a thickness of 50 μm, which has been heated to 35°C, so that the dried film thickness was 135 nm. By drying with hot-air blow at 80°C, a high refractive index layer was formed.

<Formation of low refractive index layer>

Subsequently, the coating liquid for the low refractive index layer produced above was kept at 35°C and coated by using a wire bar on the polyethylene terephthalate film, which has been heated to 35°C, so that the dried film thickness was 175 nm. By drying with hot-air blow at 80°C, a low refractive index layer was formed.

<Production of infrared shielding film>

On the low refractive index layer formed above, five units, in which each unit consists of high refractive index layer/low refractive index layer, were additionally laminated in the same manner repeated to produce the sample 1-1, which was an infrared shielding film consisting of the high refractive index layer and the low refractive index layer, each in six layers (twelve layers in total).

[Production of sample 1-2]

The sample 1-2 was produced in the same manner as the production of the sample 1-1 except that, for producing a coating liquid for the high refractive index layer, the sol of zirconium oxide particles was changed to 20% by mass sol of titanium oxide particles (volume average particle diameter of 35 nm, rutile type titanium oxide particles).

[Production of sample 1-3]

In the production of the sample 1-2, the binder for the coating liquid for the high refractive index layer was changed to polyvinyl alcohol (PVA235), and, the coating liquid for the high refractive index layer was kept at 35°C and coated by using a wire bar on the polyethylene terephthalate film, which has been heated to 35°C, so that the dried film thickness was 175 nm. By drying with hot-air blow at 80°C, a high refractive index layer was formed. Next, the binder for the coating liquid for the low refractive index layer was changed to poly-N-n-propyl acrylamide, and, the coating liquid for the low refractive index layer was kept at 18°C and coated by using a wire bar on the high refractive index layer of the polyethylene terephthalate film with a thickness of 50 $\mu$m, which has been heated to 35°C, so that the dried film thickness was 135 nm. By drying with hot-air blow at 80°C and following the same procedures after forming the low refractive index layer, the sample 1-3 was produced.

[Production of sample 1-4]

The coating liquid for the high refractive index layer of the sample 1-2 was used and, , the coating liquid for the high refractive index layer was kept at 18°C and coated by using a wire bar on the polyethylene terephthalate film with a thickness of 50 $\mu$m, which has been heated to 35°C, so that the dried film thickness was 135 nm. By drying with hot-air blow at 80°C, a high refractive index layer was formed. Next, the coating liquid for the low refractive index layer of the sample 3 was used and, in the same manner as the coating liquid for the high refractive index layer, , the coating liquid for the low liquid refractive index layer was kept at 18°C and coated by using a wire bar on top of the high refractive index layer of the polyethylene terephthalate film with a thickness of 50 $\mu$m, which has been heated to 35°C, so that the dried film thickness was 135 nm. By drying with hot-air blow at 80°C and following the same procedures after forming the low refractive index layer, the sample 1-4 was produced.

[Production of sample 1-5]

The sample 1-5 was produced in the same manner as the production of the sample 1-2 except that the binder for the coating liquid for the high refractive index layer was changed to poly-N,N-diethylacrylamide (lower limit critical solution temperature of 32°C). As poly-N-N-diethyl acrylamide, the one manufactured by Sigma Aldrich Japan Company (weight average molecular weight of 7000) was used.

[Production of sample 1-6]

The sample 1-6 was produced in the same manner as the production of the sample 1-2 except that the binder for the coating liquid for the high refractive index layer was changed to poly-N-isopropyl acrylamide (lower limit critical solution temperature of 32°C). As poly-N-isopropyl acrylamide, PNIPAM manufactured by Sigma Aldrich Japan Company (weight average molecular weight of 19,000 to 26,000) was used.

[Production of sample 1-7]

The sample 1-7 was produced in the same manner as the production of the sample 1-2 except that the binder for the coating liquid for the high refractive index layer was changed to N-acryloyl glycine amide-N-acryloyl asparagine amide copolymer (2:1) (upper limit critical solution temperature of 8°C), and, , the coating liquid for the high refractive index layer was kept at 12°C and coated, by using a wire bar, on the polyethylene terephthalate film, which has been heated to 5°C, so that the dried film thickness was 175 nm followed by blowing cold air for 3 min under the condition that the film surface was 5°C or lower then blowing hot air at 80°C for drying to form the high refractive index layer.
As N-acryloyl glycine amide-N-acryloyl asparagine amide copolymer (2 : 1), the one with weight average molecular weight of 9000 manufactured by Sigma Aldrich Japan Company was used.

[Production of sample 1-8]

The sample 1-8 was produced in the same manner as the production of the sample 1-7 except that the binder for the coating liquid for the high refractive index layer was changed to N-acetyl acrylamide-methacrylamide copolymer (1 : 12) (upper limit critical solution temperature of 21°C), and, , the coating liquid for the high refractive index layer was kept at 25°C and coated by using a wire bar on the polyethylene terephthalate film, which has been kept at 15°C, so that the dried film thickness was 175 nm followed by blowing cold air for 3 min under the condition that the film surface was 15°C or lower and blowing hot air at 80°C for drying to form the high refractive index layer.

As N-acetyl acrylamide- methacrylamide copolymer (1 : 12), the one with weight average molecular weight of 60000 manufactured by Sigma Aldrich Japan Company was used.

[Production of samples 1-9 to 1-11]

The samples 1-9 to 1-11 consisting of the high refractive index layer and the low refractive index layer, each in six layer (twelve layers in total), were produced in the same manner as the production of the samples 1-2, 1-5, and 1-6 except that, six units of the coating liquid for the high refractive index layer (coating liquid temperature of 18°C) and the coating liquid for the low refractive index layer (coating liquid temperature of 40°C) were simultaneously coated by using a die coater on the polyethylene terephthalate film with a thickness of 50 $\mu$m, which has been heated to 35°C, so that the dried film was a thickness of 135 nm each, followed by blowing hot air at 80°C for drying to form simultaneously the high refractive index layer and the low refractive index layer.

[Production of sample 1-12]

The sample 1-12 was produced in the same manner as the production of the sample 1-7 except that six units of the coating liquid for the high refractive index layer and the coating liquid for the low refractive index layer were simultaneously coated while the temperature of the coating liquid for the low refractive index layer was kept at 5°C, followed by blowing hot air at 80°C for drying to form simultaneously the high refractive index layer and the low refractive index layer.

[Production of sample 1-13]

The sample 1-13 was produced in the same manner as the production of the sample 1-8 except that six units of the coating liquid for the high refractive index layer and the coating liquid for the low refractive index layer were simultaneously coated while the temperature of the coating liquid for the low refractive index layer was kept at 15°C followed by blowing hot air at 80°C for drying to form simultaneously the high refractive index layer and the low refractive index layer.

[Production of sample 1-14]

The sample 1-14 was produced in the same manner as the production of the sample 1-9, except that the coating liquid for the high refractive index layer (coating liquid temperature of 35°C) and the coating liquid for the low refractive index layer (coating liquid temperature of 18°C) of the sample 1-3 were used.

[Production of sample 1-15]

The sample 1-15 was produced in the same manner as the production of the sample 1-9, except that the binder for the coating liquid for the high refractive index layer and the coating liquid for the low refractive index layer of the sample 6 was changed to N-acetyl acrylamide-methacrylamide copolymer (1 : 12) (upper limit critical solution temperature of 21°C) and the liquid temperature was kept at 25°C.

[Production of sample 1-16]

The sample 1-16 was produced in the same manner as the production of the sample 1-1, except that the sol of zirconium oxide particles was not added to producing the coating liquid for the high refractive index layer.

[Production of sample 1-17]

The sample 1-17 was produced in the same manner as the production of the sample 1-1 except that the binder was changed to polyvinyl alcohol (PVA235) for producing the coating liquid for the high refractive index layer.

[Production of sample 1-18]

The sample 1-18 was produced in the same manner as the production of the sample 1-1 except that the binder was changed to polyacrylamide having no temperature responsiveness for producing the coating liquid for the high refractive index layer.

[Production of sample 1-19]

According to Examples 1 and 2 of JP 2009-86659 A, the high refractive index layer and the low refractive index layer were laminated by turns, each in six layers, on a PET base to produce the sample 1-19.
Productions were made as follows.

<Production of dispersion A>

As inorganic particles, 109 parts by mass of rutile type titanium oxide (manufactured by Ishihara Sangyo Kaisha, Ltd., TTO-55A, particle diameter of 30 to 50 nm, surface treated by aluminum hydroxide, refractive index 2.6), 11 parts by mass of polyethylene imine based block polymer as a dispersant, and 180 parts by mass of polypropylene glycol monomethyl ether acetate (PGMEA, manufactured by Wako Pure Chemical Industries, Ltd.) were dispersed for 24 minutes by a bead mill disperser with 141 parts by mass of zirconia bead that the average diameter thereof was 0.5 mm. Then followed by further dispersing by the bead mill disperser for 147 minutes by changing to the zirconia bead that the average diameter thereof was 0.1 mm, and dispersion A was obtained.

<Production of solution A>

A PGMEA solution was prepared and referred to as the solution A which contains 50% of 4,4'-bis($\beta$-methacryloyloxyethylthio)diphenyl sulfone (refractive index of 1.65 after curing) as a binder resin and 0.25% of 2,4,6-trimethylbenzoyl diphenylphosphine oxide as a polymerization initiator.

<Production of solution B>

A mixture solution having the mixing ratio of 1 : 7 (mass ratio) of the dispersion liquid A and solution A was prepared, and referred to as solution B.

<Production of solution C>

A mixture solution having the mixing ratio of 1 : 2 (mass ratio) of the solution B and PGMEA was prepared, and referred to as solution C.

<Production of high refractive index layer A>

After dropping 2 ml of solution C on a polyethylene terephthalate film with a thickness 50 $\mu$m and coating the film by Spin coater (1H-D7, manufactured by Mikasa Co., Ltd.) under the condition of 1, 000 rpm for 30 seconds, it was heated for 10 minutes at 120°C. Then, the film was exposed to ultraviolet radiation by using an electrodeless mercury lamp (manufactured by Fusion UV systems) of output 184 W/cm to be an integrated light quantity of 2.8 J/cm$^2$, and thus the high refractive index layer Awas obtained. The filmthickness was around 134 nm.
The high refractive index layer A was surface modified by the corona discharge treatment (Corona discharge surface treatment equipment manufactured by Shinko Electric & Instrumentation Co., Ltd.) . After dropping 2 ml of 1% by mass aqueous solution of hydroxyethyl cellulose (manufactured by Tokyo Chemical Industry Co., Ltd.) on it, it was left to stand for 1 minute at the room temperature, and then coated by spin coater by 500 rpm for 30 seconds. Immediately after coating, it was heated for 10 minutes on hot plate (HPD-3000, manufactured by AS ONE Corporation) at 30°C and the low refractive index layer was laminated on the high refractive index layer A.
Further, the sample 1-19 was produced by additionally laminating the high refractive index layer and the low refractive index layer by turns, each in five layers, according to the same procedure as described above.

[Production of sample 1-20]

According to Example 1 and the application example of JP 2004-123766 A, the sample 1-20 was produced by laminating the high refractive index layer and the low refractive index layer by turns, each in six layers, on a PET base.

Productions were made as follows.

After the raw materials were mixed as described below and dispersed for 4 hours using a ball mill and a dispersed particle diameter of 20 nm was observed, 1.5 parts by mass of an ultraviolet curing binder (manufactured by Shin-Etsu Chemical Co., Ltd., X-12-2400, an effective component of 30% by mass) and 0.15 part by mass of a catalyst (manufactured by Shin-Etsu Chemical Co., Ltd., DX-2400) were added, and the mixture was dispersed for one hour using a ball mill. When a dispersed particle diameter of 16 nm was observed, it was taken as the high refractive index coating liquid A. The coating liquid was coated on a PET film (thickness of 50 $\mu$m) using a No. 08 bar coater so that the thickness after dried was 100 nm. After dried at 100°C, the product was irradiated with ultraviolet light for curing, whereby the high refractive index layer B was formed.

Isopropyl alcohol 100 parts
Pyridine (manufactured by Wako Pure Chemical Industries, Ltd., special grade) 3 parts
Ethyl silicate solution 5 parts (HAS-1 manufactured by Colcoat Co., Ltd., effective component of 30%)
Rutile type titanium oxide particles (55N, manufactured by Ishihara Sangyo Kaisha, Ltd.) 10 parts
Subsequently, the low refractive index layer was formed.

(Slurry composition of low refractive index layer)

1 Part of silica sol having particle diameter of 10 to 20 nm (average particle diameter of 15 nm)(IPA-ST, manufactured by Nissan Chemical Industries, Ltd.), 10 parts of isopropyl alcohol (manufactured by Wako Pure Chemical Industries, Ltd., special grade) as an organic solvent, 3 to 10 parts of an ultraviolet curing binder (manufactured by Shin-Etsu Chemical Co., Ltd., X-12-2400) as a binder precursor, and 0.3 to 1 part of a catalyst (DX-2400 manufactured by Shin-Etsu Chemical Co., Ltd.) were mixed and stirred using a stirrer to obtain a solution for the low refractive index layer. The solution was then coated on the high refractive index layer B by using a bar coater. After coating, it was dried at 100°C and the product was irradiated with ultraviolet light for curing, whereby the low refractive index layer was formed. By additionally laminating the high refractive index layer and the low refractive index layer by turns, each in five layers, the sample 20 was produced.

<<Evaluation of infrared shielding film>>

Measurement of the following characteristic values and evaluation of the performances were carried out for each infrared shielding film produced above.

(Measurement of refractive index of each layer)

A sample was prepared by forming on a substrate the subject layer as a monolayer coating for measuring refractive index (high refractive index layer and low refractive index layer), and the refractive index was measured by the following method for each of the high refractive index layer and the low refractive index layer.

After a roughing treatment for the back surface opposite to the measurement side of each sample, a light absorbing treatment was carried out using a black spray to prevent reflection from the back surface. Using a spectrophotometer U-4000 (manufactured by Hitachi, Ltd.), the reflectance in visible light region (400 nm to 700 nm) was measured under 5 degree mirror reflection. The refractive index was obtained from the result of the measurement, and listed in Table 1.

(Deterioration condition over time)

The following temperature cycle was employed as a substitute condition over time.

- temperature: low temperature of -20°C and high temperature of +55°C
- time: 10 minutes or longer for upper limit and lower limit, respectively, single cycle for three hours
- temperature change rate: 100°C/hr for both temperature increase and decrease
- number of cycles: 90

- wind rate: 2 m/s

(Measurement of visible light transmittance and infrared transmittance)

After each infrared shielding film produced above was treated under the above deterioration condition over time, by using the spectrophotometer (U-4000, an integrating sphere was used, manufactured by Hitachi, Ltd.) which had been used for the above refractive index measurement, the light transmittance of each infrared shielding film was measured in the region of 300 nm to 2000 nm. The transmittance at 550 nm was used as a visible light transmittance, and the transmittance at 1200 nm was used as infrared transmittance.

(Evaluation of flexibility)

For each infrared shielding film prepared above, after the treatment under the above deterioration condition over time, 1000 times of bending test was conducted according to the method of flexibility test based on JIS K5600-5-1 using a flexibility testing apparatus Type 1 (IMC-AOF2, diameter of mandrel: $\phi$ 20 mm, manufactured by Imoto Machinery Co., Ltd.). The surface of the infrared shielding film was then observed with naked eyes, and the flexibility was evaluated according to the following criteria.
⊙: No trace of bending or crack was observed on the surface of the infrared shielding film.
○: Slight trace of bending was observed on the surface of the infrared shielding film.
△: Minute cracks were observed on the surface of the infrared shielding film.
✕: Many apparent cracks were observed on the surface of the infrared shielding film.

(Evaluation of coloration property)

Each infrared shielding film produced above was irradiated with light at irradiance of 1 kW/m$^2$ for 100 hours by using a metal halide lamp type weatherability tester (M6T, manufactured by Suga Test Instruments Co., Ltd.). A coloration state after the irradiation was then observed with naked eyes, and the evaluation was made according to the following criteria.

⊙: Absolutely no coloration was observed.
○: Almost no coloration was observed.
△: Slight coloration was observed.
X: Distinct coloration was observed.

The measurement results and evaluation results obtained above are listed in Table 1.

[Table 1]

| Sample No. | Metal oxide | Binder | | Coating Method | Refractive index | | Stability over time | | | | Remarks |
| | | High refractive index layer | Low refractive index layer | | High refractive index layer | Low refractive index layer | Infrared transmittance (%) | Visible light transmittance | Flexibility | Coloration property | |
|---|---|---|---|---|---|---|---|---|---|---|---|
| 1-1 | $ZrO_2$ | A1 | Polyvinyl alcohol (PVA235) | Successive coating | 1.85 | 1.45 | 28 | 80 | Δ | Δ | Present invention |
| 1-2 | $TiO_2$ | A1 | Polyvinyl alcohol (PVA235) | Successive coating | 1.92 | 1.46 | 22 | 82 | ○ | ○ | Present invention |
| 1-3 | $TiO_2$ | Polyvinyl alcohol (PVA235) | A1 | Successive coating | 1.92 | 1.46 | 26 | 83 | ○ | ○ | Present invention |
| 1-4 | $TiO_2$ | A1 | A1 | Successive coating | 1.92 | 1.46 | 20 | 85 | ○ | ○ | Present invention |
| 1-5 | $TiO_2$ | A2 | Polyvinyl alcohol (PVA235) | Successive coating | 1.92 | 1.46 | 25 | 83 | ○ | ○ | Present invention |
| 1-6 | $TiO_2$ | A3 | Polyvinyl alcohol (PVA235) | Successive coating | 1.92 | 1.46 | 20 | 88 | ⊙ | ○ | Present invention |
| 1-7 | $TiO_2$ | B1 | Polyvinyl alcohol (PVA235) | Successive coating | 1.92 | 1.46 | 24 | 85 | ○ | ○ | Present invention |
| 1-8 | $TiO_2$ | B2 | Polyvinyl alcohol (PVA235) | Successive coating | 1.92 | 1.46 | 26 | 83 | ○ | ○ | Present invention |
| 1-9 | $TiO_2$ | A1 | Polyvinyl alcohol (PVA235) | Simultaneous coating | 1.92 | 1.46 | 18 | 87 | ○ | ⊙ | Present invention |
| 1-10 | $TiO_2$ | A2 | Polyvinyl alcohol (PVA235) | Simultaneous coating | 1.92 | 1.46 | 20 | 83 | ○ | ⊙ | Present invention |
| 1-11 | $TiO_2$ | A3 | Polyvinyl alcohol (PVA235) | Simultaneous coating | 1.92 | 1.46 | 15 | 88 | ⊙ | ⊙ | Present invention |
| 1-12 | $TiO_2$ | B1 | Polyvinyl alcohol (PVA235) | Simultaneous coating | 1.92 | 1.46 | 18 | 85 | ○ | ⊙ | Present invention |
| 1-13 | $TiO_2$ | B2 | Polyvinyl alcohol (PVA235) | Simultaneous cotating | 1.92 | 1.46 | 20 | 83 | ○ | ⊙ | Present invention |

(continued)

| Sample No. | Metal oxide | Binder | | Coating Method | Refractive index | | Stability over time | | | | Remarks |
|---|---|---|---|---|---|---|---|---|---|---|---|
| | | High refractive index layer | Low refractive index layer | | High refractive index layer | Low refractive index layer | Infrared transmittance (%) | Visible light transmittance | Flexibility | Coloration property | |
| 1-14 | TiO$_2$ | Polyvinyl alcohol (PVA235) | A1 | Simultaneous cotating | 1.92 | 1.46 | 16 | 85 | ○ | ⊙ | Present invention |
| 1-15 | TiO$_2$ | A3 | B2 | Simultaneous cotating | 1.92 | 1.46 | 10 | 90 | ⊙ | ⊙ | Present invention |
| 1-16 | - | A1 | Polyvinyl alcohol (PVA235) | Successive coating | 1.52 | 1.46 | 85 | 90 | Δ | Δ | Comparative Example |
| 1-17 | ZrO$_2$ | Polyvinyl alcohol (PVA235) | Polyvinyl alcohol (PVA235) | Successive coating | 1.85 | 1.46 | 65 | 85 | Δ | Δ | Comparative Example |
| 1-18 | ZrO$_2$ | Polyacrylamide | Polyvinyl alcohol (PVA235) | Successive coating | 1.85 | 1.46 | 54 | 80 | Δ | Δ | Comparative Example |
| 1-19 | TiO$_2$ | 4,4'-Bis(β-methacryloyloxyethylthio) diphenykl sulfone | Hydroxyethyl cellulose | Successive coating | 1.90 | 1.50 | 32 | 75 | × | × | Comparative Example |
| 1-20 | TiO$_2$ | Ultraviolet curing binder (X-12-2400 manufactured by Shin-Etsu Chemical Co., Ltd.) | Ultraviolet curing binder (X-12-2400 manufactured by Shin-Etsu Chemical Co., Ltd.) | Successive coating | 1.94 | 1.45 | 28 | 60 | × | × | Comparative Example |

A1: Poly-N-n-propyl acrylamide (lower limit critical solution temperature of 21°C)
A2: Poly-N-N-diethyl acrylamide (lower limit critical solution temperature of 32°C)
A3: Poly-N-isopropyl acrylamide (lower limit critical solution temperature of 32°C)
B1: N-Acryloyl glycine amide-N-acryloyl asparagine amide copolymer (2 : 1) (upper limit critical solution temperature of 8°C)
B2: N-Acetyl acrylamide-methacrylamide copolymer (1 : 12) (upper limit critical solution temperature of 21°C)

EP 2 711 747 A1

28

As it is clearly listed in the results of Table 1, the infrared shielding film of the invention can lower near infrared transmittance without lowering visible light transmittance and exhibits no coloration over time, and stable flexibility.

<Example I-2>

[Production of near infrared reflector 1-1 to 1-15]

Near infrared reflectors 1-1 to 1-15 were produced by using the infrared shielding film of samples 1-1 to 1-15 prepared in Example I-1. On a transparent acrylic resin plate having a thickness of 5 mm and a size of 20 cm × 20 cm, each of the infrared shielding film of sample 1-1 to 1-15 was pasted with an acrylic adhesive to produce the near infrared reflectors 1-1 to 1-15.

[Evaluation]

The near infrared reflectors 1-1 to 1-15 were easily usable, even though the near infrared reflector had a large size. In addition, an excellent near infrared reflectance property was confirmed by using the infrared shielding film of the invention.

<Example II-1>

<Preparation of dispersion liquid of titanium oxide particles>

(Preparation of dispersion liquid 1 of titanium oxide particles)

To 60 g of 20% by mass of titanium oxide particle sol (volume average particle diameter of 35 nm, a rutile type titanium oxide particles) under stirring, 100 g of propionic acid was added in small portions. The disposed solid matters were washed with methyl acetate, added with 135 g of mixture liquid of n-butanol and toluene (1 : 1), and subjected to ultrasonic dispersion to obtain dispersion liquid. Under stirring, the obtained dispersion liquid was added with 50 g of n-propylamine in small portions. The disposed solid matters were washed with n-butanol, added with 40 g of ethyl acetate, and subjected to ultrasonic dispersion to obtain dispersion liquid. The obtained dispersion liquid was 12% by mass.

(Preparation of dispersion liquid 2 of titanium oxide particles)

To the dispersion liquid 1 obtained above, further 10 g of ethyl acetate and 2 g of tricresyl phosphate were added, and after ultrasonic dispersion, the dispersion liquid 2 was obtained. The obtained dispersion liquid was 10% by mass.

(Preparation of dispersion liquid 3 of metal oxide particles)

Except that tricresyl phosphate was changed to dioctyl phthalate, 10% by mass of the dispersion liquid was obtained in the same manner as the preparation of dispersion liquid 2 of titanium oxide particles.

«Production of infrared shielding film»

(Example 2-1)

[Preparation of sample 2-1]

(Preparation of coating liquid 1 for high refractive index layer)

The following additives (1) to (4) were added in order and mixed to prepare the coating liquid 1 for the high refractive index layer. Hereinafter, methyl ethyl ketone will be referred to as "MEK." The surfactant described below means "BYK-337 (siloxane based surfactant, manufactured by BYK Japan KK)." As ethyl cellulose phenylcarbamate, the one manufactured by Daicel Corporation was used.

(1) Dispersion liquid 1 of titanium oxide particles 120 g
(2) Methyl ethyl ketone (MEK) 150 g
(3) 5.0% by mass MEK solution of ethyl cellulose phenylcarbamate 200 g

(4) 5.0% by mass MEK solution of surfactant 0.40 g.

(Preparation of coating liquid 1 for low refractive index layer)

The following additives (1) to (4) were added in order and mixed to prepare the coating liquid 1 for the low refractive index layer. As polyvinyl formal, the one manufactured by Wako Pure Chemical Industries, Ltd. was used.

(1) 20% by mass colloidal silica (volume average particle diameter of 6 nm) 68g
(2) MEK 240 g
(3) 5.0% by mass MEK solution of polyvinyl formal 200 g
(4) 5.0% by mass MEK solution of surfactant 0.60 g.

<Laminate formation>

(Formation of high refractive index layer 1)

The coating liquid 1 for the high refractive index layer produced above was coated by using a wire bar on a polyethylene terephthalate film (size: 27 cm × 21 cm) with a thickness of 50 μm so that the dried film thickness was 135 nm. By drying with hot-air blow at 100°C, the high refractive index layer 1 was formed.

<Formation of low refractive index layer 1>

Subsequently, by using a wire bar, the coating liquid 1 for the low refractive index layer was coated on the high refractive index layer 1 on the polyethylene terephthalate film so that the dried film thickness was 175 nm. By drying with hot-air blow at 100°C, the low refractive index layer 1 was formed.

<Production of infrared shielding film>

On the low refractive index layer 1 formed above, five units, in which each unit consists of the high refractive index layer 1/the low refractive index layer 1, were additionally laminated to produce the sample 2-1, which was an infrared shielding film consisting of the high refractive index layer and the low refractive index layer, each in six layers (twelve layers in total). The film thickness of the sample 2-1 was 51.9 μm.

(Example 2-2 to 2-7)

[Production of samples 2-2 to 2-7]

The samples 2-2 to 2-7 were produced in the same manner as the production of the sample 2-1 except that the binder for the high refractive index layer and the low refractive index layer was changed to those described in Table 2. Meanwhile, each of the followings was used: cyanoethyl cellulose (manufactured by Tokyo Chemical Industry Co., Ltd.), cellulose acetate butyrate (manufactured by Nagase & Co., Ltd.: EASTMAN CAB), cellulose acetate propionate (manufactured by Nagase & Co., Ltd. : EASTMAN CAP), polyvinyl valeral, polyvinyl ethanal, and polyvinyl butyral (manufactured by Sekisui Chemical Company, Limited: S-LEC).

(Example 2-8)

[Production of sample 2-8]

The sample 2-8 was produced in the same manner as the production of the sample 2-7 except that the binder for the high refractive index layer and the low refractive index layer was changed, respectively.

(Example 2-9 to 2-10)

[Production of samples 2-9 and 2-10]

The samples 2-9 and 2-10 were produced in the same manner as the production of the sample 2-8 except that the dispersion liquid 1 of titanium oxide particles was changed to the dispersion liquid 2 or dispersion liquid 3 of titanium oxide particles.

(Example 2-11 and 2-12)

[Production of samples 2-11 and 2-12]

In the production of samples 2-8 and 2-9, the coating liquid for the high refractive index layer and the coating liquid for the low refractive index layer were simultaneously extruded and coated by turns by extrusion coating method, each in six layers, followed by drying to produce samples 2-11 and 2-12.

(Comparative Examples 2-1 to 2-13)

[Production of sample 2-13]

The sample 2-13 was produced in the same manner as the production of the sample 2-3 except that the binder for the low refractive index layer was changed to cellulose acetate butyrate the same as the high refractive index layer.

(Comparative Examples 2-1 to 2-14)

[Production of sample 2-14]

According to Example 1 of JP 6-11608 A, the high refractive index layer and the low refractive index layer were laminated by turns to produce sample 2-14.
Productions were made as follows.
The high refractive index polymer layer and the low refractive index polymer layer were selected as follows.
High refractive index polymer layer: polyacrylic acid

- = 1.527 (20°C)
- $T_g$ = 106°C

Low refractive index polymer layer: polyhydroxyethyl methacrylate

- = 1.512 (20°C)
- $T_g$ = 55°C

Those high refractive index polymer layer and low refractive index polymer layer were laminated by turns, to be fifty layers each for film thicknesses of 0.15 $\mu$m (900 nm reflection), 0.165 $\mu$m (1000 nm reflection), 0.182 $\mu$m (1100 nm reflection), 0.199 $\mu$m (1200 nm reflection), 0.215 $\mu$m (1300 nm reflection), 0.232 $\mu$m (1400 nm reflection), and 0.248 $\mu$m (1500 nm reflection) to produce sample 14.

(Comparative Examples 2-1 to 2-15)

[Production of sample 2-15]

According to Examples 1 and 2 of JP 2009-86659 A, the high refractive index layer and the low refractive index layer were laminated by turns, for six layers each, on a PET base to produce the sample 2-15.
Productions were made as follows .

<Production of dispersion liquid A>

As inorganic particles, 109 parts by mass of rutile type titanium oxide (manufactured by Ishihara Sangyo Kaisha, Ltd., TTO-55A, a particle diameter of 30 to 50 nm, surface treated by aluminum hydroxide, refractive index 2.6), 11 parts by mass of polyethylene imine based block polymer as a dispersant, and 180 parts by mass of polypropylene glycol monomethyl ether acetate (PGMEA, manufactured by Wako Pure Chemical Industries, Ltd.) were dispersed for 24 minutes by a bead mill disperser with 141 parts by mass of zirconia bead that average diameter thereof was 0.5 mm. Then followed by further dispersing by the bead mill disperser for 147 minutes with the zirconia beads changed to those that average diameter thereof was 0.1 mm, and dispersion liquid A was obtained.

<Production of solution A>

A PGMEA solution was prepared and referred to as the solution A which included 50% by mass of 4,4'-bis($\beta$-methacryloyloxyethylthio)diphenyl sulfone (refractive index of 1.65 after curing) as a binder resin (a binder component) and 0.25% by mass of 2,4,6-trimethylbenzoyl diphenylphosphine oxide as a polymerization initiator.

<Production of solution B>

A mixture solution of dispersion liquid A and solution A at the mixing ratio of 1 : 7 (mass ratio) was prepared, and referred to as solution B.

<Production of solution C>

A mixture solution of the solution B and PGMEA at the mixing ratio of 1 : 2 (mass ratio) was prepared, and referred to as solution C.

<Production of high refractive index layer A>

After dropping 2 ml of solution C on a polyethylene terephthalate film with a thickness 50 $\mu$m and coating the film by Spin coater (1H-D7, manufactured by Mikasa Co., Ltd.) under the condition of 1, 000 rpm for 30 seconds, it was heated for 10 minutes at 120°C. Then, the film was exposed to ultraviolet radiation by using a electrodeless mercury lamp (manufactured by Fusion UV systems) of output 184 W/cm to be an integrated light quantity of 2.8 J/cm$^2$, and thus the high refractive index layerAwas obtained. The filmthickness was around 134 nm.
The high refractive index layer A was surface modified by the corona discharge treatment (Corona discharge surface treatment equipment manufactured by Shinko Electric & Instrumentation Co., Ltd.). After dropping 2 ml of 1% by mass aqueous solution of hydroxyethyl cellulose (manufactured by Tokyo Chemical Industry Co., Ltd.) on it, it was left to stand for 1 minute at the room temperature, and then coated by a spin coater at 500 rpm for 30 seconds. Immediately after coating, it was heated for 10 minutes on a hot plate (HPD-3000, manufactured by AS ONE Corporation) at 80°C and the low refractive index layer was laminated on the high refractive index layer A.
Further, the sample 2-15 was produced by additionally laminating the high refractive index layer and the low refractive index layer by turns, each of five layers, according to the same procedure as described above.

<<Evaluation of infrared shielding film>>

Measurement of the following characteristic values and evaluation of the performances were carried out for each infrared shielding film produced above.

(Measurement of refractive index of each layer)

A sample was prepared by forming on a substrate the subject layer as a monolayer coating for measuring refractive index (the high refractive index layer or low refractive index layer), and the refractive index was measured by the following method for each of the high refractive index layer and the low refractive index layer.
After a roughing treatment was conducted on the back surface opposite to the measurement side of each sample, a light absorbing treatment was carried out using a black spray to prevent reflection from the back surface. Using a spectrophotometer U-4000 (manufactured by Hitachi, Ltd.), the reflectance in visible light region (400 nm to 700 nm) was measured under the condition of 5 degree mirror reflection. The refractive index was obtained from the result of the measurement, and listed in Table 2.

(Deterioration condition over time)

The following temperature cycle was employed as a substitute condition over time.
- Temperature: a low temperature of -20°C and a high temperature of +55°C
- Time: 10 minutes or longer for the upper limit and lower limit, respectively, single cycle for three hours
- Temperature change rate: 100°C/hr for both temperature increase and decrease
- Number of cycles: 90
- Wind rate: 2 m/s

(Measurement of visible light transmittance and infrared transmittance)

After each infrared shielding film produced above was treated under the above deterioration condition over time, by using the spectrophotometer (U-4000, using an integrating sphere, manufactured by Hitachi, Ltd.) which had been used for the above refractive index measurement, the transmittance of each infrared shielding film was measured in the region of 300 nm to 2000 nm. The transmittance at 550 nm was used as a visible light transmittance, and the transmittance at 1200 nm was used as infrared transmittance.

(Evaluation of flexibility)

For each infrared shielding film prepared above, after the treatment under the above deterioration condition over time, 1000 times of bending test was conducted according to the method of flexibility test based on JIS K5600-5-1 using a flexibility testing apparatus Type 1 (IMC-AOF2, diameter of mandrel: $\phi$ 20 mm, manufactured by Imoto Machinery Co., Ltd.). The surface of the infrared shielding film was then observed with naked eyes, and the flexibility was evaluated according to the following criteria.
⊙: No trace of bending or crack was observed on the surface of the infrared shielding film.
○: Slight trace of bending was observed on the surface of the infrared shielding film.
△: Minute cracks were observed on the surface of the infrared shielding film.
×: Many apparent cracks were observed on the surface of the infrared shielding film.

(Evaluation of transparency)

Each infrared shielding film produced was irradiated with light at irradiance of 1 kW/m$^2$ for 100 hours by using a metal halide lamp type anti-weatherability tester (M6T, manufactured by Suga Test Instruments Co., Ltd.). A coloration state after the irradiation was then observed with naked eyes, and the evaluation was made according to the following criteria.

⊙: Absolutely no coloration was observed.
○: Almost no coloration was observed.
△: Slight coloration was observed.
×: Distinct coloration was observed.

The measurement results and evaluation results obtained above are listed in Table 2.

[Table 2]

| | Sample number | Titanium oxide particle dispersion number | Binder | | Coating method | Refractive index | | | Stability over time | | Flexibility | Transparency |
|---|---|---|---|---|---|---|---|---|---|---|---|---|
| | | | High refractive index layer | Low refractive index layer | | High refractive index layer | Low refractive index layer | Difference in refractive index | Infrared transmission (%) | Visible light transmission (%) | | |
| Example | 2-1 | 2-1 | 1 | Ethyl cellulose phenylcarbamate (average substitution degree of 1.7, and average polymerization degree of 500) | Polyvinyl formal (acetalization degree of 62% by mol, average polymerization degree of 1500, and average molecular weight of 98000) | Successive coating | 1.90 | 1.49 | 0.41 | 28 | 80 | △ | △ |
| | 2-2 | 2-2 | 1 | Cyanoethyl cellulose (average substitution degree of 1.9, and average polymerization degree of 1000) | Same as above | Successive coating | 1.90 | 1.49 | 0.41 | 30 | 82 | △ | △ |
| | 2-3 | 2-3 | 1 | Cellulose acetate butyrate (average substitution degree of 2.4, and average polymerization degree of 4000) | Same as above | Successive coating | 1.92 | 1.49 | 0.43 | 24 | 86 | △ | ○ |
| | 2-4 | 2-4 | 1 | Cellulose acetate propionate (average substitution degree of 2.1, and average polymerization degree of 2000) | Same as above | Successive coating | 1.92 | 1.49 | 0.43 | 25 | 83 | △ | ○ |
| | 2-5 | 2-5 | 1 | Same as above | Polyvinyl valeral (acetalization | Successive coating | 1.92 | 1.49 | 0.43 | 26 | 85 | △ | ○ |

| | | | | | | | | | | | | |
|---|---|---|---|---|---|---|---|---|---|---|---|---|
| | | | | degree of 70% by mol, average polymerization degree of 1800, and average molecular weight of 148000) | | | | | | | | |
| 2-6 | 2-6 | 1 | Same as above | Polyvinyl ethanal (acetalization degree of 68% by mol, average polymerization degree of 2000, and average molecular weight of 120000) | Successive coating | 1.92 | 1.49 | 0.43 | 23 | 86 | ○ | ○ |
| 2-7 | 2-7 | 1 | Same as above | Polyvinyl butyral (acetalization degree of 72% by mol, average polymerization degree of 2300, and average molecular weight of 200000) | Successive coating | 1.92 | 1.49 | 0.43 | 22 | 86 | ○ | ○ |
| 2-8 | 2-8 | 1 | Polyvinylbutyral (acetalization degree of 72% by mol, average polymerization degree of 2300, and average molecular weight of 200000) | Cellulose acetate propionate (average substitution degree of 2.1 and average polymerization degree of 2000) | Successive coating | 1.92 | 1.49 | 0.43 | 22 | 86 | ○ | ◉ |
| 2-9 | 2-9 | 2 | Same as above | Same as above | Successive coating | 1.92 | 1.49 | 0.43 | 8 | 90 | ○ | ◉ |
| 2-10 | 2-10 | 3 | Same as above | Same as above | Successive coating | 1.92 | 1.49 | 0.43 | 10 | 88 | ○ | ◉ |
| 2-11 | 2-11 | 1 | Same as above | Same as above | Simultaneous coating | 1.92 | 1.49 | 0.43 | 20 | 87 | ◉ | ◉ |
| 2-12 | 2-12 | 2 | Same as above | Same as above | Simultaneous coating | 1.92 | 1.49 | 0.43 | 9 | 89 | ◉ | ◉ |

| | | | | | | | | | | | | |
|---|---|---|---|---|---|---|---|---|---|---|---|---|
| Comparative Example | 2-13 | 2-13 | 1 | Cellulose acetate butyrate (average substitution degree of 2.4, and average polymerization degree of 4000) | Cellulose acetate butyrate (average substitution degree of 2.4, and average polymerization degree of 4000) | Successive coating | 1.92 | 1.49 | 0.24 | 50 | 60 | × | △ |
| | 2-14 | 2-14 | No | Polyacrylic acid | Polyhydroxyethyl methacrylate | – | 1.53 | 1.51 | 0.01 | 60 | 70 | × | ○ |
| | 2-15 | 2-15 | Yes | 4,4'-Bis (β-methacryloyloxyet hylthio) diphenyl sulfone | Hydroxyethyl cellulose | Successive coating | 1.90 | 1.50 | 0.40 | 32 | 75 | × | × |

As it is clearly shown in the results of Table 2, the infrared shielding film of the invention has an excellent infrared reflection property (infrared shielding property), visible light transmittance, film flexibility, and transparency even after the use for a long period of time.

<Example II-2>

[Production of infrared reflector 2-1 to 2-12]

Infrared shielding bodies 2-1 to 2-12 were produced by using the infrared shielding film of samples 2-1 to 2-12 prepared in Example 2-1. On a transparent acrylic resin plate having a thickness of 5 mm and a size of 20 cm × 20 cm, each of the infrared shielding film of sample 2-1 to 2-12 was pasted with an acrylic adhesive to produce the infrared shielding bodies 2-1 to 2-12.

[Evaluation]

The infrared shielding bodies 2-1 to 2-12 of the invention as produced above were easily usable, even though the infrared shielding bodies had a large size. In addition, an excellent infrared shielding property was confirmed by using the infrared shielding film of the invention.

Meanwhile, the present application is based on Japanese patent application No. 2011-110592 filed on May 17, 2011 and Japanese patent application No. 2011-179437 filed on August 19, 2011, and their disclosures are incorporated herein by reference in their entirety.

**Claims**

1. An infrared shielding film comprising at least one unit consisting of a high refractive index layer including metal oxide particles and a low refractive index layer on a substrate, wherein

(i) at least one layer of the high refractive index layer and the low refractive index layer includes a temperature responsive polymer as a binder component; or
(ii) the high refractive index, layer includes any one of a cellulose compound or polyvinyl acetal resin as a binder component, and

the low refractive index layer includes a binder component different from that of the high refractive index layer.

2. The infrared shielding film according to claim 1, wherein the metal oxide particles includes titanium oxide particles.

3. The infrared shielding film according to claim 1 or 2, wherein at least one layer of the high refractive index layer and the low refractive index layer includes the temperature responsive polymer.

4. The infrared shielding filmaccording to any one of claims 1 to 3, wherein the temperature responsive polymer includes poly-N-isopropyl acrylamide.

5. The infrared shielding film according to claim 1 or 2, wherein the high refractive index layer includes any one of a cellulose compound and a polyvinyl acetal resin as a main component of the binder component, and
the low refractive index layer includes the other of a cellulose compound and a polyvinyl acetal resin as a main component of the binder component.

6. The infrared shielding film according to claim 5, wherein the cellulose compound is acetyl C3-6 acyl cellulose.

7. The infrared shielding film according to claim 5 or 6, wherein a surface of the titanium oxide particles is coated with an oil.

8. The infrared shielding film according to any one of claims 1 to 7, wherein a difference in refractive index between the high refractive index layer and the low refractive index layer is 0.1 or higher.

9. A method for producing an infrared shielding film comprising at least one unit consisting of a high refractive index layer including metal oxide particles and a low refractive index layer on a substrate, wherein

(i) at least one layer of the high refractive index layer and the low refractive index layer is formed by using a coating liquid including a temperature responsive polymer; or
(ii) the high refractive index layer is formed by using a coating liquid including any one of a cellulose compound and a polyvinyl acetal resin, and

the low refractive index layer is formed by using a coating liquid including the other of the cellulose compound and the polyvinyl acetal resin.

10. The method according to claim 9, wherein any one coating liquid of the coating liquid for forming the high refractive index layer and the coating liquid for forming the low refractive index layer includes a temperature responsive polymer, and
simultaneous multilayer coating is performed while a temperature of any one of the coating liquid for forming the high refractive index layer and the coating liquid for forming the low refractive index layer is set to be lower than a critical solution temperature of the temperature responsive polymer and a temperature of the other is set to be equal to or higher than the critical solution temperature of the temperature responsive polymer, and drying is performed, to form the high refractive index layer and the low refractive index layer.

11. The method according to claim 9, wherein the method includes:

coating, on a substrate, the coating liquid for forming the high refractive index layer including any one of the cellulose compound and the polyvinyl acetal resin as a main component of a binder component, the metal oxide particles, and a solvent , and the coating liquid for forming the low refractive index layer including the other of the cellulose compound and the polyvinyl acetal resin, and a solvent, as a main component of a binder component; and
drying the substrate coated with the coating liquid.

12. An infrared shielding body comprising the infrared shielding film according to any one of claims 1 to 8 or the infrared shielding film obtained by the method according to any one of claims 9 to 11 formed on at least one surface of a substrate.

## INTERNATIONAL SEARCH REPORT

| International application No. |
|---|
| PCT/JP2012/062588 |

### A. CLASSIFICATION OF SUBJECT MATTER
*G02B5/26*(2006.01)i, *G02B5/28*(2006.01)i

According to International Patent Classification (IPC) or to both national classification and IPC

### B. FIELDS SEARCHED

Minimum documentation searched (classification system followed by classification symbols)
G02B5/26, G02B5/28

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2009-086659 A  (Mitsubishi Chemical Corp.), 23 April 2009 (23.04.2009), claims; entire text; all drawings (Family: none) | 1-12 |
| A | JP 2008-003283 A  (Toyoda Gosei Co., Ltd.), 10 January 2008 (10.01.2008), claims; entire text; all drawings & US 2007/0297046 A1 | 1-12 |
| A | JP 2004-125822 A  (Toto Ltd.), 22 April 2004 (22.04.2004), claims; entire text; all drawings (Family: none) | 1-12 |

☐ Further documents are listed in the continuation of Box C.    ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 30 July, 2012 (30.07.12) | 21 August, 2012 (21.08.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

# EP 2 711 747 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6011608 A
- JP 2004123766 A
- JP 2009086659 A
- JP 63017221 A
- JP 7000819 A
- JP 9165218 A
- JP 11043327 A
- WO 2007039953 A
- US 2322027 A
- JP 57014091 A
- JP 60219083 A
- JP 60219084 A
- JP 61020792 A
- JP 61188183 A
- JP 63017807 A
- JP 4093284 A
- JP 5278324 A
- JP 6092011 A
- JP 6183134 A
- JP 6297830 A
- JP 7081214 A
- JP 7101142 A
- JP 7179029 A
- JP 7137431 A
- JP 6026530 A
- JP 57074193 A
- JP 57087988 A
- JP 62261476 A
- JP 57074192 A
- JP 57087989 A
- JP 60072785 A
- JP 61146591 A
- JP 1095091 A
- JP 3013376 A
- JP 59042993 A
- JP 59052689 A
- JP 62280069 A
- JP 61242871 A
- JP 4219266 A
- US 2761419 A
- US 2761791 A
- JP 2011110592 A
- JP 2011179437 A

### Non-patent literature cited in the description

- **MANABU SEINO.** Titanium oxide - physical properties and applied technology. Gihodo Shuppan Co., Ltd, 2000, 255-258
- Kagaku Daijiten 1. Kyoritsu Shuppan Co., Ltd, 1960, 268-270